# EUROPEAN PATENT APPLICATION

(11) **EP 4 701 294 A1**
(43) Date of publication of application: **25.02.2026**
(21) Application number: 24805415.7
(22) Date of filing: 02.04.2024
(51) Int. Cl.: H04W 64/00

(54) **POSITIONING METHOD AND APPARATUS**

(30) Priority: 12.05.2023 CN 202310541780; 07.07.2023 CN 202310840871
(71) Applicant: Huawei Technologies Co., Ltd., Shenzhen, Guangdong 518129 (CN)
(72) Inventor: ZHANG, Mengchen, Shenzhen, Guangdong 518129 (CN); XU, Haibo, Shenzhen, Guangdong 518129 (CN); YAO, Chuting, Shenzhen, Guangdong 518129 (CN); LI, Chao, Shenzhen, Guangdong 518129 (CN)
(74) Representative: Thun, Clemens
(86) International application number: PCT/CN2024/085559
(87) International publication number: WO 2024/234856

(57) **Abstract**

This application provides a positioning method and an apparatus. The method includes: A first communication apparatus sends a first message, where the first message is used to request a second message from a second communication apparatus, and the second message is one or more of a positioning message and a positioning reference signal. The first communication apparatus receives the second message in a first time period, where the first time period includes a time period from sending the first message to receiving the second message, or the first time period includes a time period from a first moment to receiving the second message, and the first moment is a moment after the first communication apparatus sends the first message. The first communication apparatus is in DRX active time in the first time period. According to the method, the communication apparatus is in an active state in the first time period, so that the communication apparatus can receive a positioning message or a positioning reference signal in time, to meet a delay requirement of a positioning service.

## Description

This application claims priority to Chinese Patent Application No. 202310541780.X, filed with the China National Intellectual Property Administration on May 12, 2023 and entitled "COMMUNICATION METHOD AND DEVICE", and to Chinese Patent Application No. 202310840871.3, filed with the China National Intellectual Property Administration on July 7, 2023 and entitled "POSITIONING METHOD AND APPARATUS", both of which are incorporated herein by reference in their entireties.

### TECHNICAL FIELD

This application relates to the communication field, and specifically, to a positioning method and an apparatus.

### BACKGROUND

A discontinuous reception (Discontinuous Reception, DRX) technology is a terminal power saving technology. The DRX technology specifically enables a terminal to be in an active state for a part of time and in a dormant state for the other part of time in a specific periodicity. In this implementation, power consumption of the terminal can be reduced.

In the conventional technology, a target user equipment (Target user equipment, Target UE) may be positioned by using a positioning technology. The target UE receives or sends a positioning reference signal. The target UE is positioned by using a positioning method supported in NR and LTE. A positioning service has a quality of service (quality of service, QoS) requirement that needs to be met. For example, the QoS requirement includes parameters such as response time (response time) of the UE.

When the target UE is positioned in a sidelink (Sidelink, SL) scenario, to perform positioning of the target UE, a sidelink positioning reference signal (Sidelink positioning reference signal, SL-PRS) and/or a sidelink positioning protocol (sidelink positioning protocol, SLPP) message needs to be transmitted between UEs, where both the SL-PRS and the SLPP message are scheduled by sidelink control information (sidelink control information, SCI).

When the SL-PRS and the SLPP message are received between UEs performing positioning based on DRX, the UE monitors a physical sidelink control channel (physical sidelink control channel, PSCCH) only in an active time period in a DRX cycle. If the UE is in the dormant state when needing to receive the SL-PRS or the SLPP message, the UE cannot receive the SL-PRS or the SLPP message, causing failure of a positioning delay to meet a requirement. Therefore, QoS of the positioning service of the UE is affected due to the DRX.

### SUMMARY

This application provides a positioning method and an apparatus. A first time period is defined, so that a communication apparatus is not in a dormant state when needing to receive a positioning message and/or a positioning reference signal, and the communication apparatus is in an active state in the first time period. In this way, the communication apparatus can receive the positioning message and/or the positioning reference signal in time, to meet a delay requirement of a positioning service.

According to a first aspect, a positioning method is provided. The method may be performed by a communication apparatus, or may be performed by a chip or a circuit configured in the communication apparatus. This is not limited in this application.

The method includes: A first communication apparatus sends a first message, where the first message is used to request a second message from a second communication apparatus, and the second message is one or more of a positioning message and a positioning reference signal. The first communication apparatus receives the second message in a first time period, where the first time period includes a time period from sending the first message to receiving the second message, or the first time period includes a time period from a first moment to receiving the second message, and the first moment is a moment after the first communication apparatus sends the first message, where the first communication apparatus is in discontinuous reception DRX active time in the first time period.

According to the foregoing solution, the first communication apparatus is in the active state when receiving the positioning message and the positioning reference signal, and can receive the positioning message and the positioning reference signal in time. Therefore, a delay requirement of a positioning service can be better met.

In this embodiment of this application, the first time period includes the time period from sending the first message to receiving the second message. It may also be understood as that the first time period includes time from sending the first message to receiving the second message. This is not limited in this application.

In a possible implementation, the first message includes first indication information, and the first indication information indicates maximum response time for sending the second message by the second communication apparatus.

It should be understood that the maximum response time is a latest moment at which the second communication apparatus sends the second message. Optionally, the latest moment is determined based on the delay requirement of the positioning service.

According to the foregoing solution, the latest moment at which the second communication apparatus sends the second message is notified to the second communication apparatus, and the second communication apparatus sends the second message before the latest moment, so that the first communication apparatus can receive the second message in the first time period.

In a possible implementation, before the first communication apparatus sends the first message, the method further includes: The first communication apparatus sends first indication information, where the first indication information indicates maximum response time for sending the second message by the second communication apparatus.

In a possible implementation, the method further includes: The first communication apparatus receives the first indication information from a third communication apparatus or a network device; or the first communication apparatus determines the first indication information.

It should be noted that the third communication apparatus may be an apparatus other than the first communication apparatus and the second communication apparatus, or may be a same apparatus as the second communication apparatus.

In a possible implementation, the method further includes: A media access control MAC layer of the first communication apparatus receives second indication information. The first communication apparatus enters an active state in response to the second indication information, where the second indication information includes activation time information, and the activation time information indicates maximum time for which the first communication apparatus keeps in the active state.

It should be noted that, that the first communication apparatus enters the active state may also be understood as that the MAC layer of the first communication apparatus enters the active state.

In a possible implementation, the second message is the positioning message, the first message is a sidelink positioning protocol SLPP message, and the method further includes: An SLPP layer of the first communication apparatus sends the second indication information to the MAC layer, where the second indication information includes the activation time information, and the activation time information indicates the maximum time for which the first communication apparatus keeps in the active state.

In another possible implementation, the second message is the positioning reference signal, the first message is an SLPP message, a radio resource control RRC message, or a physical PHY message, and the method further includes: An SLPP layer, an RRC layer, or a PHY layer of the first communication apparatus sends the second indication information to the MAC layer, where the second indication information includes the activation time information, and the activation time information indicates the maximum time for which the first communication apparatus keeps in the active state.

In a possible implementation, the method further includes: When the MAC layer receives the second indication information, the first communication apparatus enters the active state.

Alternatively, the MAC layer receives the second indication information, the MAC layer sends third indication information to the PHY layer, where the third indication information indicates the PHY layer to send a positioning reference signal, and after the MAC layer sends the third indication information, the first communication apparatus enters the active state.

Alternatively, the MAC layer receives the second indication information, the MAC layer sends third indication information to the PHY layer, the PHY layer receives the third indication information and sends a positioning reference signal, the PHY layer sends fourth indication information to the MAC layer, where the fourth indication information indicates that the PHY layer has sent the positioning reference signal, and after the MAC layer receives the fourth indication information, the first communication apparatus enters the active state.

It should be understood that a moment at which the first communication apparatus enters the active state is the first moment.

In a possible implementation, the positioning message includes one or more of measurement result information, location information, assistance data, and capability information, and the positioning reference signal includes a sidelink positioning reference signal.

In a possible implementation, when the second message is the positioning reference signal, the method further includes: The first communication apparatus receives a third message, where the third message is used to request positioning measurement result information or location information related to multi-cell round trip time Multi-RTT. The first communication apparatus enters the active state in response to the third message.

In a possible implementation, the method further includes: The first communication apparatus receives the first message, and the first communication apparatus ends the active time after receiving the first message.

When the first message is the positioning message, the method further includes: The sidelink positioning protocol SLPP layer of the first communication apparatus sends sixth indication information to the media access control MAC layer, where the sixth indication information indicates the MAC layer to exit the active state.

When the first message is the positioning reference signal, the method further includes: The physical PHY layer of the first communication apparatus sends sixth indication information to the media access control MAC layer, where the sixth indication information indicates the MAC layer to exit the active state.

According to a second aspect, a positioning method is provided. The method may be performed by a communication apparatus, or may be performed by a chip or a circuit configured in the communication apparatus. This is not limited in this application.

The method includes: A first communication apparatus sends first request information to a second communication apparatus based on a positioning service, where the first request information is used to request the second communication apparatus to cancel or reconfigure a discontinuous reception DRX configuration for the first communication apparatus. The first communication apparatus receives fifth indication information, where the fifth indication information indicates the first communication apparatus to cancel or reconfigure the DRX configuration. The first communication apparatus executes the positioning service with the second communication apparatus.

According to the foregoing solution, the DRX configuration of the first communication apparatus is canceled or reconfigured. After the DRX configuration of the first communication apparatus is canceled, the first communication apparatus can keep in a monitoring state, so that a positioning message and/or a positioning reference signal sent by another apparatus can be received in time. Alternatively, after the second communication apparatus reconfigures the DRX configuration for the first communication apparatus, when a positioning message or a positioning reference signal needs to be sent to the first communication apparatus, it can be ensured that the first communication apparatus is in a monitoring state in a reconfigured DRX configuration, so that the positioning message and/or the positioning reference signal can be received in time.

According to a third aspect, a positioning method is provided. The method may be performed by a communication apparatus, or may be performed by a chip or a circuit configured in the communication apparatus. This is not limited in this application.

The method includes: A second communication apparatus determines or receives first indication information, where the first indication information indicates maximum response time for sending a second message by the second communication apparatus, and the second message is one or more of a positioning message and a positioning reference signal. The second communication apparatus receives a first message, where the first message is used to request the second message. The second communication apparatus sends the second message based on the maximum response time.

According to a fourth aspect, a positioning apparatus is provided, including: a sending unit, configured to send a first message, where the first message is used to request a second message from a second communication apparatus, and the second message is one or more of a positioning message and a positioning reference signal; and a receiving unit, configured to receive the second message in a first time period, where the first time period includes a time period from sending the first message to receiving the second message, or the first time period includes a time period from a first moment to receiving the second message, and the first moment is a moment after the sending unit sends the first message, where the apparatus is in discontinuous reception DRX active time in the first time period.

In a possible implementation, the first message includes first indication information, and the first indication information indicates maximum response time for sending the second message by the second communication apparatus.

In a possible implementation, before the sending unit sends the first message, the method further includes: The sending unit sends first indication information, where the first indication information indicates maximum response time for sending the second message by the second communication apparatus.

In a possible implementation, the receiving unit is further configured to receive the first indication information from a third communication apparatus or a network device.

In a possible implementation, the apparatus further includes a processing unit, configured to determine the first indication information.

In a possible implementation, the receiving unit is further configured to: receive second indication information from a MAC layer. The apparatus enters an active state in response to the second indication information, where the second indication information includes activation time information, and the activation time information indicates maximum time for which a first communication apparatus keeps in the active state.

In a possible implementation, the sending unit is further configured for an SLPP layer, an RRC layer, or a PHY layer to send the second indication information to the MAC layer, where the second indication information includes the activation time information, and the activation time information indicates the maximum time for which the first communication apparatus keeps in the active state.

In a possible implementation, the receiving unit is further configured for the MAC layer to receive the second indication information.

In a possible implementation, the sending unit is further configured for the MAC layer to send third indication information to the PHY layer, where the third indication information indicates the PHY layer to send a positioning reference signal.

In a possible implementation, the sending unit is further configured for the PHY layer to send fourth indication information to the MAC layer, where the fourth indication information indicates that the PHY layer has sent the positioning reference signal.

In a possible implementation, the positioning message includes one or more of measurement result information, location information, assistance data, and capability information, and the positioning reference signal includes a sidelink positioning reference signal.

In a possible implementation, the receiving unit is further configured to receive a third message, where the third message is used to request positioning measurement result information or location information related to multi-cell round trip time Multi-RTT. The apparatus enters the active state in response to the third message.

According to a fifth aspect, a positioning apparatus is provided, including: a sending unit, configured to send first request information to a second communication apparatus based on a positioning service, where the first request information is used to request the second communication apparatus to cancel or reconfigure a discontinuous reception DRX configuration for the apparatus; a receiving unit, configured to receive fifth indication information, where the fifth indication information indicates the apparatus to cancel or reconfigure the DRX configuration; and a processing unit, configured to execute the positioning service with the second communication apparatus.

According to a sixth aspect, a positioning apparatus is provided, including: a receiving unit or a processing unit, configured to determine or receive first indication information, where the first indication information indicates maximum response time for sending a second message by the apparatus, and the second message is one or more of a positioning message and a positioning reference signal, where the receiving unit is further configured to receive a first message, where the first message is used to request the second message; and the sending unit is further configured to send the second message based on the maximum response time.

According to a seventh aspect, a wireless communication apparatus is provided, and includes modules or units configured to perform the method according to any one of the first aspect or the possible implementations of the first aspect.

According to an eighth aspect, a wireless communication apparatus is provided, and includes modules or units configured to perform the method according to any one of the second aspect or the possible implementations of the second aspect.

According to a ninth aspect, a wireless communication apparatus is provided, and includes modules or units configured to perform the method according to any one of the third aspect or the possible implementations of the third aspect.

According to a tenth aspect, a communication device is provided, including a processor. The processor is coupled to a memory, and may be configured to perform the method according to the first aspect and the possible implementations of the first aspect, the second aspect and the possible implementations of the second aspect, or the third aspect and the possible implementations of the third aspect. In a possible implementation, the communication device further includes the memory. In a possible implementation, the communication device further includes a communication interface, and the processor is coupled to the communication interface.

In an implementation, the communication device is a terminal device. When the communication device is the terminal device, the communication interface may be a transceiver or an input/output interface.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eleventh aspect, a communication apparatus is provided, including an input circuit, an output circuit, and a processing circuit. The processing circuit is configured to receive a signal through the input circuit, and transmit a signal through the output circuit, so that the method according to any one of the first aspect to the third aspect and any one of the possible implementations of the foregoing aspects is implemented.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example without limitation to, a receiver, and a signal output by the output circuit may be output to and transmitted by, for example without limitation to, a transmitter; and the input circuit and the output circuit may be different circuits or may be a same circuit. In this case, the circuit is used as the input circuit and the output circuit respectively at different moments. Specific implementations of the processor and the various circuits are not limited in embodiments of this application.

According to a twelfth aspect, a processing apparatus is provided, including a processor and a memory. The processor is configured to: read instructions stored in the memory, receive a signal through a receiver, and transmit a signal through a transmitter, to perform the method according to any one of the first aspect to the third aspect and any one of the possible implementations of the foregoing aspects.

In a possible implementation, there are one or more processors, and there are one or more memories.

In a possible implementation, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that, a related data exchange process, for example, sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor in the foregoing aspect may be a chip, and the processor may be implemented by hardware or software. When the processor is implemented by the hardware, the processor may be a logic circuit, an integrated circuit, or the like; or when the processor is implemented by the software, the processor may be a general-purpose processor, and is implemented by reading software code stored in the memory. The memory may be integrated in the processor, or located outside the processor and exist independently.

According to a thirteenth aspect, a computer program product is provided. The computer program product includes a computer program (which may also be referred to as code or instructions). When the computer program is run, a computer is enabled to perform the method according to any one of the first aspect to the third aspect and any one of the possible implementations of the foregoing aspects.

According to a fourteenth aspect, a computer-readable medium is provided. The computer-readable medium stores a computer program (which may also be referred to as code or instructions). When the computer program is run on a computer, the computer is enabled to perform the method according to any one of the first aspect to the third aspect and any one of the possible implementations of the foregoing aspects.

According to a fifteenth aspect, a communication system is provided, including at least one of the foregoing first communication apparatus, second communication apparatus, and third communication apparatus.

### BRIEF DESCRIPTION OF DRAWINGS

FIG. 1 is a diagram of an example of a communication system of a method according to this application;
FIG. 2 is a diagram of a DRX configuration of a communication apparatus according to this application;
FIG. 3 is a diagram of a DRX configuration of a communication apparatus according to this application;
FIG. 4 is a diagram of a communication system architecture of a method according to this application;
FIG. 5 is a schematic flowchart of a communication method according to this application;
FIG. 6 is a schematic flowchart of another communication method according to this application;
FIG. 7 is a schematic flowchart of still another communication method according to this application;
FIG. 8 is a schematic flowchart of still another communication method according to this application;
FIG. 9 is a schematic flowchart of still another communication method according to this application;
FIG. 10 is a block diagram of a communication apparatus according to an embodiment of this application;
FIG. 11 is a block diagram of another communication apparatus according to an embodiment of this application;
FIG. 12 is a block diagram of a terminal device according to an embodiment of this application; and
FIG. 13 is a block diagram of a network device according to an embodiment of this application.

### DESCRIPTION OF EMBODIMENTS

The following describes the technical solutions of this application with reference to the accompanying drawings.

The technical solutions in embodiments of this application may be applied to various communication systems, for example, a global system of mobile communications (Global System of Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a machine-to-machine (machine-to-machine, M2M) communication system, a non-terrestrial network (non-terrestrial network, NTN) communication system, a 5th generation (5th Generation, 5G) mobile communication system, a new radio (New Radio, NR) system, or a future wireless communication system.

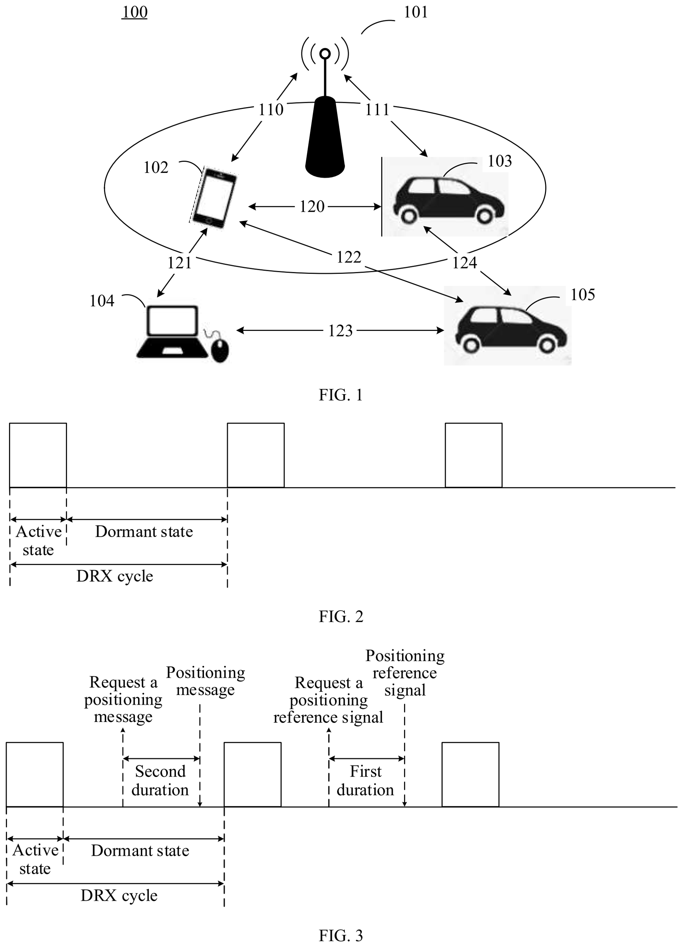

FIG. 1 is a diagram of a structure of a communication system 100 applicable to an embodiment of this application.

The communication system applicable to this embodiment of this application may include at least two terminal devices, for example, terminal devices 102, 103, 104, and 105 in the communication system 100 shown in FIG. 1. The communication system applicable to this embodiment of this application may further include at least one network device, for example, a network device 101 in the wireless communication system 100 shown in FIG. 1. A sidelink (sidelink, SL) may be established between the at least two terminal devices, for example, sidelinks 120, 121, 122, 123, and 124 in FIG. 1. The terminal devices that establish the sidelink may directly communicate with each other. Device-to-device communication may be performed between two terminal devices. For example, device-to-device communication may be performed between two terminal devices by using a resource pool. The terminal device may apply sidelink SL discontinuous reception (discontinuous reception, DRX), and the terminal device may receive, in DRX active time, unicast, multicast, or broadcast data sent by another terminal device. Alternatively, the terminal device in the communication system may establish a wireless connection to the network device for data communication. The terminal devices 102 and 103 shown in FIG. 1 respectively establish radio links 110 and 111 to the network device. Alternatively, the terminal device in the communication system, for example, the terminal devices 104 and 105 shown in FIG. 1, may not establish a radio link to the network device. This is not limited in this application.

The terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a vehicle-mounted communication apparatus, a road side unit (road side unit, RSU), a vehicle-mounted communication processing chip, a wearable device, a wireless apparatus (for example, a communication module, a modem, or a chip system) built in the foregoing device, a terminal device in a 5G network, a terminal device in a future wireless communication system, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, for example, various smart bands or smart jewelry for monitoring physical signs.

In addition, the terminal device may alternatively be a terminal device in an internet of things (internet of things, IoT) system. IoT is an important part of future information technology development. A main technical feature of the IoT is connecting a thing to a network by using a communication technology, to implement an intelligent network for interconnection between a person and a machine or between things.

It should be understood that a specific form of the terminal device is not limited in this application.

The technical solutions in embodiments of this application may be further applied to the network device, for example, including an access network device and/or a core network device. The access network device is a device having a wireless transceiver function, and is configured to communicate with the terminal device. The access network device includes but is not limited to an evolved NodeB (evolved NodeB, eNB), a radio network controller (radio network controller, RNC), a road side unit (road side unit, RSU), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), an access point (access point, AP) in a wireless fidelity (wireless fidelity, WI-FI) system, a wireless relay node, a wireless backhaul node, a transmission point (transmission point, TP), a transmission and reception point (transmission and reception point, TRP), or the like; may be a gNB or a transmission point (TRP or TP) in a 5G (for example, an NR) system, or one antenna panel or a group of antenna panels (including a plurality of antenna panels) of a base station in the 5G system; or may be a network node that forms a gNB or a transmission point, for example, a baseband unit (BBU), or a distributed unit (distributed unit, DU). Alternatively, the network device may be a network side apparatus that provides a communication service or communication control for a terminal device in an internet of vehicles. Alternatively, the network device may be a subsequent evolved base station evolved in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. The core network device is used for mobility management or positioning management. The core network device includes but is not limited to a location management function (Location Management Function, LMF), an access and mobility management function (access and mobility management function, AMF), a location server (LoCation Server, LCS), and the like.

The network device provides a communication service for the terminal device, and the terminal device communicates with the network device by using a transmission resource (for example, a frequency domain resource or a time domain resource) allocated by the network device. Optionally, the terminal device may alternatively be located in a cell corresponding to the network device, and the cell may belong to a macro base station (for example, a macro eNB or a macro gNB).

In the conventional technology, a target UE (Target UE) may be positioned by using a positioning technology, for example, positioning is performed based on an interface (Uu interface) between the UE and the access network device, so that a network element/terminal/entity requesting a positioning service obtains a location of the terminal.

When the target UE is positioned, the target UE needs to receive and/or send a positioning reference signal, for example, receive a positioning reference signal (positioning reference signal, PRS), and send a sounding reference signal (sounding reference signal, SRS). In addition, a positioning method supported in NR and LTE is used to position the target UE.

The network element/terminal/entity requesting the positioning service includes: a location server (LoCation Server, LCS), a UE, or an access and mobility management function (access and mobility management function, AMF). For example, the LCS requests a serving AMF (serving AMF) of the target UE to position the target UE. The request may be referred to as a mobile terminated location request (Mobile Terminated Location Request, MT-LR). For another example, the serving AMF determines to position the target UE. If the UE needs to be positioned due to an emergency call service, a request initiated by the serving AMF may be referred to as a network induced location request (Network Induced Location Request, NI-LR). For still another example, the UE requests the positioning service from the serving AMF of the UE for positioning, transmission of assistance information, or the like. The request may be referred to as a mobile originated location request (Mobile Originated Location Request, MO-LR). Other manners of triggering positioning further include a deferred MT-LR (Deferred MT-LR) and the like.

The positioning method includes but is not limited to multi-round trip time (Multi-Round Trip Time, Multi-RTT) positioning, downlink time difference of arrival (Downlink Time Difference Of Arrival, DL-TDOA) positioning, uplink time difference of arrival (Uplink Time Difference of Arrival, UL-TDOA) positioning, downlink angle-of-departure (Downlink Angle-of-Departure, DL-AoD) positioning, uplink angle of arrival (Uplink Angle of Arrival, UL-AoA) positioning, NR enhanced cell ID (NR Enhanced Cell ID, NR E CID) positioning, motion sensor (Motion sensor) positioning, terrestrial beacon system (Terrestrial Beacon System, TBS) positioning, Bluetooth (Bluetooth) positioning, wireless local area network (Wireless Local Area Network, WLAN) positioning, barometric pressure sensor (Barometric pressure sensor) positioning, enhanced cell ID positioning, observed time difference of arrival (Observed Time Difference Of Arrival, OTDOA) positioning, network-assisted global navigation satellite system (global navigation satellite system, GNSS) positioning, and the like.

In a conventional technology related to Uu interface positioning, after a positioning service is initiated, a location management function (Location Management Function, LMF) network element needs to perform interaction with the base station, for example, to obtain assistance information related to air interface positioning. The LMF further needs to perform interaction with the UE, for example, to obtain a positioning capability of the UE or provide positioning-related assistance information for the UE. The receiving of the positioning reference signal by the UE is configured or scheduled by the base station, and the sending of the positioning reference signal by the UE is also configured or scheduled by the base station. In addition, a positioning reference signal configuration may be determined by the base station and/or the LMF.

An existing positioning method includes: The LMF calculates location information of the target UE, which is referred to as LMF-based or UE-assisted (LMF-based or UE-assisted) positioning. In this case, the UE and/or the base station need to report a measurement result to the LMF, and the LMF calculates the location information of the target UE based on the measurement result reported by the UE and/or the base station. Alternatively, the method includes: The UE calculates location information of the UE, which is referred to as UE-based (UE-based) positioning. In this case, the UE may calculate the location information based on a measurement result, and may further report the calculated location information to the LMF.

In addition, the positioning service may also correspond to positioning quality of service (quality of service, QoS). For example, each positioning service has a corresponding positioning QoS requirement. The positioning QoS is, for example, LCS QoS. The positioning QoS includes but is not limited to one or more of the following: horizontal accuracy (horizontal accuracy), vertical accuracy (vertical accuracy), response time (response time), an LCS quality of service class (LCS QoS class), horizontal or vertical distance accuracy, horizontal or vertical direction accuracy, relative speed accuracy, and the like.

Sidelink (sidelink, SL) positioning may be understood as introducing a sidelink in a positioning scenario. For example, at least one network element/terminal/entity that can send a positioning reference signal (an SL-PRS is used as an example in the following) of an interface (a PC5 interface) between UEs is introduced in the positioning scenario. It should be understood that a specific form of the network element/terminal/entity is not limited in this application.

After the SL positioning is introduced, the positioning scenario may include positioning of a target UE based on a positioning reference signal (for example, a PRS and/or an SRS) on a Uu interface and an SL-PRS, and may further include positioning of a target UE based only on an SL-PRS.

In an SL positioning scenario, a UE receives an SL-PRS sent by another UE, and the UE may further measure the SL-PRS sent by the another UE and obtain a measurement result.

In the SL positioning scenario, a positioning method that may be used by the UE includes but is not limited to sidelink time difference of arrival (Sidelink Time Difference of Arrival, SL-TDOA) positioning, sidelink angle of arrival (Sidelink Angle of Arrival, SL-AoA) positioning, and sidelink multi-round trip time (Sidelink Multi-Round Trip Time, SL Multi-RTT) positioning. Each positioning method has a corresponding measurement result. The UE may alternatively first obtain configuration information or assistance data information of an SL-PRS, and then receive the SL-PRS based on the information.

It should be understood that, in the SL positioning scenario, information transmission may be implemented between UEs according to a PC5 interface-based positioning protocol, for example, transmission of assistance data, capability information, SL-PRS configuration information, a measurement result, and location information. The PC5 interface-based positioning protocol is not limited in this application. The following uses a sidelink positioning protocol (sidelink positioning protocol, SLPP) as an example for description. Functions supported by the SLPP include: SL positioning capability transmission, SL positioning assistance information transmission/exchange, SL positioning information transmission, error handling, and abort.

In conclusion, during SL positioning, to implement positioning of a UE, for example, absolute positioning of a target UE, or obtain a relative location between the target UE and another UE, in addition to transmission of an SL-PRS, an SLPP message also needs to be transmitted between UEs.

Optionally, the UE may perform transmission of the SL-PRS by using a resource in an SL-PRS dedicated resource pool. Alternatively, the UE may perform transmission of the SL-PRS by using a resource in a shared resource pool. The SL-PRS dedicated resource pool may be understood as a resource pool specially used for transmission of the SL-PRS, and the shared resource pool may be understood as that in addition to transmission of the SL-PRS, transmission of data may also be performed in the resource pool. For example, when an SL communication resource pool is used for the SL-PRS, transmission of the SL-PRS and transmission of the data (the data may also be an SLPP message) are performed in the same resource pool.

In the SL positioning scenario, to perform positioning of the target UE, the SL-PRS and/or the SLPP message needs to be transmitted between UEs. When the UE is configured with SL DRX, the UE also needs to receive the SL-PRS and the SLPP message based on the SL DRX configuration. Both the SL-PRS and the SLPP message may be scheduled by SCI.

It should be noted that, the UE may perform transmission of the SL-PRS by using the resource in the SL-PRS dedicated resource pool. For example, the UE performs transmission of the SL-PRS in the SL-PRS dedicated resource pool, and performs transmission of the SLPP message in the SL communication resource pool. Alternatively, the UE may perform transmission of the SL-PRS by using the resource in the shared resource pool. For example, the UE may perform transmission of the SL-PRS or transmission of the SLPP message in the shared resource pool.

The SL positioning scenario may include the target UE, an anchor UE (Anchor UE), and a server UE (Server UE). The anchor UE may be understood as a UE configured to position the target UE. The server UE may provide one or more of the following functions: determining a positioning method, distributing positioning-related assistance data, performing location calculation, performing location calculation based on SL positioning and a ranging service, selecting an anchor UE, configuring an SL-PRS, and the like. The server UE may interact with another UE through the PC5 interface to determine a ranging/SL positioning method, distribute assistance data, and calculate a location of the target UE. The target UE or the anchor UE may alternatively be used as the server UE, or the server UE is a UE other than the target UE and the anchor UE.

It should be understood that names of apparatuses such as the target UE, the anchor UE, and the server UE in this application are merely examples. All UEs having similar functions are applicable to the method in embodiments of this application. Names of the apparatuses in the SL positioning scenario are not limited in this application.

In addition, in the SL positioning scenario, the positioning service may also correspond to the QoS. In this case, the positioning QoS may include one or more of the following: accuracy, response time, an LCS quality of service class, and a range (range). The accuracy includes horizontal/vertical distance accuracy, horizontal/vertical direction accuracy, and relative speed accuracy. The range indicates applicability of a QoS attribute in a ranging (ranging) or SL positioning operation on the PC5, and the like. In addition, by way of example and not limitation, the positioning QoS may also be referred to as ranging/SL positioning QoS (Ranging/SL Positioning QoS).

When UEs communicate with each other over a sidelink, to reduce unnecessary power consumption of the UEs and reduce monitoring time of the UEs, a DRX mechanism is applied to the sidelink to help the UEs save energy. A basic principle of the SL DRX may be understood as follows: When UEs communicate with each other, a transmit end UE (Tx UE) may have data transmission in a period of time, but the Tx UE may have no data to transmit to a receive end UE (Rx UE) in a subsequent long period of time. If the Rx UE still keeps in a monitoring state when the Tx UE has no data transmission, the Rx UE is very power-consuming. Therefore, power consumption of the Rx UE may be reduced by causing the Rx UE to stop monitoring a physical sidelink control channel (physical sidelink control channel, PSCCH). An SL DRX function may control SCI monitoring of the UE. Optionally, the SL DRX is further applicable to unicast, multicast, and broadcast scenarios.

As shown in FIG. 2, the Rx UE monitors the PSCCH in DRX on duration (DRX on duration) in a DRX cycle, that is, the Rx UE is in an active state in the DRX on duration. The DRX on duration may be considered as active time in one DRX cycle. In time other than the active time in the DRX cycle, the Rx UE is in a dormant state (DRX-off), for example, may be referred to as dormant time. Optionally, in addition to the DRX on duration, the active time in the DRX cycle may further include another case. For example, after the Rx UE receives scheduling information of the Tx UE, the Rx UE starts an inactivity timer, and keeps in the active state when the inactivity timer runs.

However, the positioning service has QoS that needs to be met. For example, the QoS includes parameters such as response time. However, if the UEs performing positioning receive the SL-PRS and the SLPP message based on the SL DRX, the UE monitors the PSCCH only in the SL DRX active time, that is, the UE can receive the SL-PRS and the SLPP message only in the SL DRX active time. For example, the Rx UE can receive the SL-PRS and the SLPP message only in the SL DRX on duration. In this way, the Tx UE sends the SL-PRS and the SLPP message to the Rx UE only when the Rx UE is in the DRX on duration. Therefore, the SL DRX may cause failure of a positioning delay to meet a requirement, and the QoS of the positioning service is affected due to the SL DRX.

The following uses a specific example to describe possible impact of the SL DRX on the positioning QoS.

FIG. 3 is a diagram of an SL DRX configuration of a UE 1. After the UE 1 triggers a peer UE to send a positioning reference signal (for example, an SL-PRS), the UE 1 expects to receive, in first duration, the SL-PRS sent by the peer UE. However, when the peer UE sends the SL-PRS based on a requirement of the UE 1, the UE 1 is in a DRX-off state, that is, the UE 1 cannot receive the SL-PRS sent by the peer.

Alternatively, after the UE 1 requests a positioning message from a peer UE (for example, sends request location information RequestLocationInformation), the UE 1 expects to receive, in second duration, the positioning message (for example, provides location information ProvideLocationInformation) sent by the peer UE. However, when the peer UE sends the ProvideLocationInformation message based on a requirement of the UE 1, the UE 1 is in a DRX-off state, that is, the UE 1 cannot receive the ProvideLocationInformation message sent by the peer.

Therefore, the SL DRX affects a current positioning service, for example, affects a delay requirement of the current positioning service.

This application provides a plurality of positioning methods. To avoid that a communication apparatus is in a DRX dormant state when needing to receive an SL-PRS or an SLPP message, a first time period is defined, so that the communication apparatus is in an active state in the first time period. In this way, the communication apparatus can receive the SL-PRS or the SLPP message in time, to meet a delay requirement of a positioning service.

It should be understood that descriptions of specific scenarios in embodiments of this application are merely examples. In addition to the foregoing described application scenarios, the method provided in embodiments of this application is also applicable to an application scenario in which a similar problem exists.

In descriptions of embodiments of this application, unless otherwise specified, a quantity of nouns indicates "a singular noun or plural nouns", that is, "one or more". Unless otherwise specified, "a plurality of" or "multiple" means two or more. In addition, "at least one" may be replaced with "one or more". "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, and are not intended to limit sizes, content, a sequence, a time sequence, priorities, importance degrees, or the like of the plurality of objects. For example, first indication information and second indication information may be same information, or may be different information. In addition, such names do not indicate that the two pieces of information are different in content, sizes, application scenarios, transmit ends/receive ends, priorities, importance degrees, or the like. In addition, step numbers in embodiments described in this application are merely intended to distinguish between different steps, but are not intended to limit a sequence of the steps. For example, S410 may be performed before S420, may be performed after S420, or may be performed simultaneously with S420.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission".

It should be understood that names of all nodes and messages in this application are merely names specified for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.

This embodiment is applicable to unicast, multicast, and broadcast scenarios.

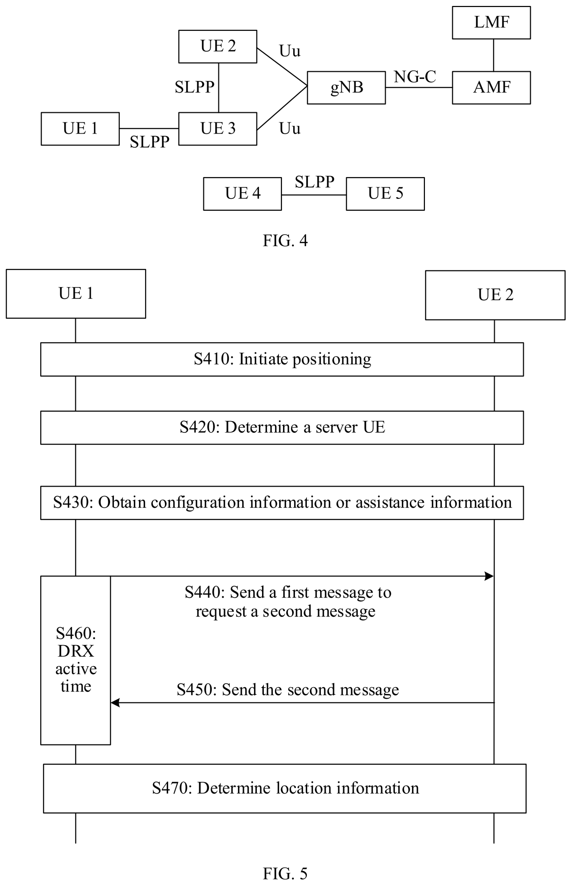

FIG. 4 is a diagram of a system architecture applicable to an embodiment of this application.

It should be understood that FIG. 4 is merely an example of a system architecture in this application. A specific form of the system architecture is not limited in this application. In addition, network coverage of a UE is not limited in this application.

The following shows several specific architectures, including a target UE that needs to be positioned, a UE (which may be referred to as an anchor UE, a reference (reference) UE, an assistant (assistant) UE, or the like, which is not limited in this application) configured to assist in positioning the target UE. Optionally, a server UE may be further included. Transmission of an SL-PRS and/or an SLPP message may be performed between two UEs.

For example, it is assumed that a UE 3 is a target UE, a UE 2 is configured to assist in positioning the UE 3, and both the UE 3 and the UE 2 may be within a coverage area of a base station. For example, RRC states of the UEs may include a connected state, an idle state, an inactive state, or the like. It should be noted that FIG. 4 is merely an example. This application imposes no limitation that the UE 2 and the UE 3 are served by a same base station. Alternatively, the UE 2 and/or the UE 3 may be UEs that access a network via a relay (relay). Optionally, the UE 2 or the UE 3 may be a server UE, or a UE 1 other than the UE 2 and the UE 3 is a server UE, or this scenario is mainly controlled by a network device, that is, there is no server UE in this scenario.

For another example, it is assumed that a UE 3 is a target UE, a UE 1 is configured to assist in positioning the UE 3, the UE 3 is within a coverage area of a base station, for example, a radio resource control (radio resource control, RRC) state of the UE 3 may include a connected state, an idle state, an inactive state, or the like, and the UE 1 is outside the coverage area of the base station. Alternatively, the UE 3 may be a UE that accesses a network via a relay. Alternatively, the UE 1 and the UE 3 may be interchanged, that is, the UE 1 is the target UE, and the UE 3 is configured to assist in positioning the UE 1. Optionally, the UE 1 or the UE 3 may be a server UE, or a UE 2 other than the UE 1 and the UE 3 is a server UE, or this scenario is mainly controlled by a network device, that is, there is no server UE in this scenario.

For another example, it is assumed that a UE 4 is a target UE, a UE 5 is configured to assist in positioning the UE 4, and both the UE 4 and the UE 5 may be outside a coverage area of a base station. Transmission of an SL-PRS is performed between the UE 4 and the UE 5. Optionally, the UE 4 or the UE 5 may be a server UE, or a UE other than the UE 4 and the UE 5 is a server UE.

The following describes in detail a plurality of communication methods provided in embodiments of this application with reference to the accompanying drawings.

It should be understood that step numbers in embodiment of this application are merely used for description, and do not limit a sequence of steps.

FIG. 5 shows a positioning method 400 according to this application. A communication apparatus is positioned by using the method. The method in FIG. 5 includes at least some of the following content.

S410: Initiate positioning.

S420: Determine a server UE in an SL positioning procedure.

S430: A UE obtains configuration information and/or assistance data.

S440: A UE 1 (that is, an example of a first communication apparatus) sends a first message to a UE 2, where the first message is used to request a second message, and the second message is one or more of a positioning message and a positioning reference signal.

S450: The UE 2 sends the second message based on maximum response time for sending the second message.

S460: The UE 1 receives the second message in a first time period, where the UE 1 is in DRX active time in the first time period.

S470: Determine a positioning result.

According to the foregoing solution, the first time period is defined, so that the UE 1 is in an active state in the first time period, avoiding a problem that the positioning message and/or the positioning reference signal cannot be received in time because the UE 1 is in a dormant state when needing to receive the positioning message and/or the positioning reference signal. For example, it can be avoided that when the UE 1 is in a DRX-off state, the UE 1 receives no SLPP message and/or SL-PRS sent by the UE 2; and it can also be avoided that a delay of a positioning service is affected because the UE 2 sends the SLPP message and/or the SL-PRS based on SL DRX of the UE 1. Therefore, a delay requirement of the positioning service can be better met.

The following describes S410 to S470 in detail.

In S410, positioning is initiated.

In the method 400, the UE 1 and the UE 2 may be any UE in the positioning service. For example, the UE 1 or the UE 2 may be a UE (which may be referred to as a target UE or the like, which is not limited in this application, and is collectively referred to as the target UE in the following for ease of description) that needs to be positioned in the positioning service, or may be a UE (which may be referred to as an anchor UE, a reference UE, an assistant UE, or the like, which is not limited in this application, and is collectively referred to as the anchor UE in the following for ease of description) configured to assist in positioning the target UE. Optionally, in addition to the UE 1 and the UE 2, the positioning service may further include another UE (for example, a server UE or another anchor UE). Alternatively, the UE 1 or the UE 2 may be a server UE that supports one or more of the foregoing functions.

SL positioning may be initiated by either a network device or the UE (UE 1, UE 2, or another UE).

In addition, a device to which the SL positioning is initiated is not limited in this application. For example, the SL positioning may be initiated to the target UE, may be initiated to the server UE, or may be initiated to the network device.

In a possible implementation, if the network device or another UE has a positioning service requirement for the target UE, the network device or another UE may send a request message to the target UE. Alternatively, the network device or another UE may first send a request message to the server UE, and then the server UE sends the request message to the target UE. Alternatively, the network device or another UE may first send a request message to a core network device, and then the core network device sends the request message to the target UE. For example, if the UE 1 is the target UE, when the network device or another UE has a positioning service requirement for the UE 1, the network device or another UE may send a request message to the UE 1. Alternatively, the network device or another UE first sends a request message to the server UE, and then the server UE sends a request message to the UE 1. Alternatively, the network device or another UE first sends a request message to the core network device, and then the core network device sends a request message to the UE 1. For another example, the UE 2 is the target UE, and a procedure of initiating positioning is similar to that in which the UE 1 is the target UE.

In another possible implementation, the target UE has a positioning service requirement for the target UE. The target UE may directly initiate positioning. Alternatively, the target UE may send a request message to the server UE, so that the server UE initiates positioning. Alternatively, the target UE sends a request message to a core network device, so that the core network device initiates positioning. For example, if the UE 1 is the target UE, when the UE 1 has a positioning service requirement for the UE 1, the UE 1 may directly initiate positioning. Alternatively, the UE 1 sends a request message to the server UE, so that the server UE initiates positioning. Alternatively, the UE 1 sends a request message to the core network device, so that the core network device initiates positioning. For another example, the UE 2 is the target UE, and a procedure of initiating positioning is similar to that in which the UE 1 is the target UE.

In S420, the server UE in the current SL positioning procedure is determined.

The server UE may be the target UE, or may be the anchor UE, or may be a UE other than the target UE and the anchor UE. This is not limited in this application. Alternatively, there is no server UE, and the positioning scenario is mainly controlled by the network device. For example, the network device performs one or more functions of the server UE. In this case, step S420 may be omitted. Alternatively, there is no server UE, and the UE in the positioning procedure directly performs one or more functions of the server UE. In this case, step S420 may be omitted.

In a possible implementation, the UE 1 is the server UE. For example, the UE 1 or another UE or the network device has a positioning requirement for the UE 1, that is, the UE 1 is the target UE. The UE 1 may determine that the UE 1 is the server UE. In addition, the UE 1 may further perform one or more functions of the server UE, and determine that the UE 2 is the anchor UE. For another example, the UE 2 or another UE or the network device has a positioning requirement for the UE 2, that is, the UE 2 is the target UE. The UE 2 may determine that the UE 1 is the server UE, and the UE 1 performs one or more functions of the server UE. Optionally, the UE 1 may also be the anchor UE. For another example, a UE 3 or another UE or the network device has a positioning requirement for the UE 3, that is, the UE 3 is the target UE. The UE 3 may determine that the UE 1 is the server UE, and the UE 1 performs one or more functions of the server UE. Optionally, the UE 2 may be the anchor UE, and the UE 1 may also be the anchor UE in addition to serving as the server UE. The determining of the server UE may include determining the server UE by the UE, determining the server UE by the network device, or determining the server UE by the network device after negotiation with the UE.

In another possible implementation, the UE 1 is the target UE, that is, the UE 1 or another UE or the network device has a positioning requirement for the UE 1. The UE 1 may determine that the UE 2 or another UE is the server UE. For example, the UE 1 determines that the UE 2 is the server UE, and the UE 2 performs one or more functions of the server UE. Optionally, the UE 2 may also be the anchor UE. For another example, the UE 1 determines that a UE 3 is the server UE, and the UE 3 performs one or more functions of the server UE. The UE 2 mainly serves as the anchor UE to assist in positioning the UE 1. The determining of the server UE may include determining the server UE by the UE, determining the server UE by the network device, or determining the server UE by the network device after negotiation with the UE.

In another possible implementation, the UE 1 is the anchor UE, that is, the UE 1 is mainly configured to assist in positioning the another UE. For example, the UE 2 or another UE or the network device has a positioning requirement for the UE 2, that is, the UE 2 is the target UE. The UE 2 determines that the UE 1 is the anchor UE, and the UE 1 assists in positioning. The UE 2 determines that a UE 3 is the server UE, and the UE 3 performs one or more functions of the server UE. For another example, the UE 3 or another UE or the network device has a positioning requirement for the UE 3, that is, the UE 3 is the target UE. The UE 3 determines that the UE 2 is the server UE, and the UE 2 performs one or more functions of the server UE. The UE 1 is the anchor UE, and the UE 2 may also be the anchor UE in addition to the server UE. The determining of the server UE may include determining the server UE by the UE, determining the server UE by the network device, or determining the server UE by the network device after negotiation with the UE.

It should be noted that, when the target UE determines the anchor UE, the target UE may directly determine the anchor UE, or the server UE may determine the anchor UE and then notify the target UE, or the target UE and the server UE may determine the anchor UE through negotiation. In addition, in this embodiment of this application, for different positioning methods in the application, the target UE may determine one or more anchor UEs to position the target UE.

In S430, the UE obtains the configuration information and/or the assistance data.

Optionally, the configuration information may be SL-PRS configuration information, and the assistance data may be SLPP assistance data (for example, SLPP assistant data). It may be understood that, in embodiments of this application, the assistance data may also be understood as assistance information.

In a possible implementation, the SL-PRS configuration information and/or the SLPP assistance data may be used by the UE to transmit or receive the SL-PRS. For example, before the UE 1 or the UE 2 sends the SL-PRS, the UE 1 or the UE 2 needs to first obtain the SL-PRS configuration information and/or the SLPP assistance data, and then perform transmission of the SL-PRS based on the SL-PRS configuration information and/or the SLPP assistance data. For another example, before the UE 1 or the UE 2 receives the SL-PRS, the UE 1 or the UE 2 needs to first obtain the SL-PRS configuration information and/or the SLPP assistance data, and then receive the SL-PRS based on the SL-PRS configuration information and/or the SLPP assistance data. Optionally, the UE 1 may be the target UE, and the UE 2 may be the anchor UE; or the UE 1 may be the anchor UE, and the UE 2 may be the target UE.

Optionally, the UE may obtain the configuration information by using an RRC message or an SLPP message. For example, the server UE (which may be the target UE, or a UE other than the target UE and the anchor UE) sends the configuration information to the UE 1 and/or the UE 2 by using an RRC reconfiguration SL (RRCReconfigurationSidelink) message, or the server UE sends the configuration information to the UE 1 and/or the UE 2 by using an SLPP provide assistance data (ProvideAssistanceData) message.

Optionally, the UE may obtain the assistance data by using an RRC message or an SLPP message. For example, the server UE (which may be the target UE, or a UE other than the target UE and the anchor UE) sends the assistance data to the UE 1 and/or the UE 2 by using an RRC reconfiguration SL (RRCReconfigurationSidelink) message, or the server UE sends the assistance data to the UE 1 and/or the UE 2 by using an SLPP provide assistance data (ProvideAssistanceData) message.

Optionally, the UE may alternatively obtain the configuration information and/or the assistance data in another manner. For example, when there is no server UE in the positioning procedure, the UE determines the configuration information and/or the assistance data or obtains the configuration information and/or the assistance data via another UE or the network device. Alternatively, regardless of whether there is the server UE in the positioning procedure, the UE may determine the configuration information and/or the assistance data or obtain the configuration information and/or the assistance data via another UE or the network device.

It should be understood that there may be one or more anchor UEs in the positioning service. That the anchor UE obtains the configuration information and/or the assistance data may be understood as that one or more anchor UEs in the positioning service obtain the configuration information and/or the assistance data. That the server UE sends the configuration information and/or the assistance data to the anchor UE may be understood as that the server UE sends the configuration information and/or the assistance data to one or more anchor UEs in the positioning service.

Optionally, the configuration information and/or the assistance data may include related information for sending the SL-PRS by the UE, for example, including time domain-related configuration information and frequency domain-related configuration information for sending the SL-PRS by the UE. Specifically, for example, a staggering pattern (staggering pattern), repetition, and a slot offset for sending the SL-PRS by the UE may be included.

In S440, the UE 1 sends the first message to the UE 2, where the first message is used to request the second message, and the second message is one or more of the positioning message and the positioning reference signal.

Optionally, in this embodiment of this application, when a higher layer (for example, an SLPP layer) of the UE 1 sends the first message to a lower layer, it may be understood as that the UE 1 sends the first message; or when a PHY layer of the UE 1 sends the first message, it may be understood as that the UE 1 sends the first message. This is not limited in this application.

In this embodiment of this application, the positioning message includes one or more of measurement result information, location information, assistance data, and capability information, and the positioning reference signal includes a sidelink positioning reference signal.

In a possible implementation, the second message is the positioning message. For example, the positioning message includes the measurement result information, and the measurement result information may indicate a measurement result of measuring a positioning reference signal by the UE, or a measurement result of measuring a sidelink positioning reference signal by the UE. Alternatively, the positioning message includes the location information, and the location information may indicate location information obtained by the UE through calculation. Optionally, the positioning message may be a provide location information (for example, ProvideLocationInformation) message or a message having a similar function. This is not limited in this application. Optionally, in this case, the first message is used to request the measurement result information or the location information. For example, the first message is a request location information (for example, RequestLocationInformation) message or a message having a similar function. This is not limited in this application. Optionally, if the UE 1 requests relative time of arrival (RTOA, Relative Time of Arrival)-related measurement result information from the UE 2, the UE 2 sends an RTOA-related measurement result. If the UE 1 requests Multi-RTT-related measurement result information from the UE 2, the UE 2 sends a Multi-RTT time difference-related measurement result.

For another example, the positioning message includes the assistance data, and the assistance data may indicate configuration information used when the UE performs transmission of the SL-PRS. Optionally, the positioning message may be a provide assistance data (ProvideAssistanceData) message or a message having a similar function. Optionally, in this case, the first message is used to request the assistance data. For example, the first message is a request assistance data (RequestAssistanceData) message or a message having a similar function.

For another example, the positioning message includes the capability information, and the capability information may indicate a positioning-related capability of the UE, for example, a positioning method supported by the UE, whether the UE supports SL positioning, and antenna information of the UE. Optionally, the positioning message may be a provide capability information (ProvideCapabilities) message or a message having a similar function. Optionally, in this case, the first message is used to request the capability information. For example, the first message is a request capability information (RequestCapabilities) message or a message having a similar function.

It should be noted that, if the second message is the positioning message, and the first message is used to request the second message, both the first message and the second message may be messages in the SLPP protocol or messages having a similar function to those of the SLPP.

In another possible implementation, the UE 1 needs to receive a positioning reference signal sent by the UE 2, or request a positioning reference signal from the UE 2, or trigger a peer UE (that is, the UE 2) to send a positioning reference signal. In this case, the UE 1 sends the first message to the UE 2, and the first message is used to request the positioning reference signal or trigger the peer UE to send the positioning reference signal. For example, the first message is a message at the SLPP layer. After the UE 2 receives the SLPP message, the UE 2 sends an SL-PRS. For example, the SLPP message may indicate configuration information of the SL-PRS. For another example, the first message is an SL-PRS. After the UE 2 receives the SL-PRS sent by the UE 1, the UE 2 sends an SL-PRS. For example, if the UE determines that a currently used positioning method is Multi-RTT, the UE sends an SL-PRS. For another example, the first message is SCI. After the UE 2 receives the SCI sent by the UE 1, the UE 2 sends an SL-PRS. In this case, the SCI may further indicate a resource scheduled by the UE 1 for the UE 2. For another example, the first message is MAC layer information. After the UE 2 receives the MAC layer information, the UE 2 sends an SL-PRS.

In S450, the UE 2 sends the second message based on the maximum response time for sending the second message.

The maximum response time is a latest moment at which the second message is sent.

In a possible implementation, the maximum response time is notified by the UE 1 to the UE 2. For example, when the UE 1 sends the first message to the UE 2, the first message further includes first indication information, the first indication information indicates the maximum response time for sending the second message by the UE 2, and the maximum response time may also be understood as the latest moment at which the second message is sent. For another example, before the UE 1 sends the first message to the UE 2, the UE 1 sends first indication information to the UE 2. For example, the UE 1 indicates the first indication information while indicating QoS of a current positioning service to the UE 2. For another example, before the UE 1 sends the first message to the UE 2, the UE 2 obtains first indication information while obtaining the configuration information and/or the assistance data. Optionally, the UE 2 may receive configuration information and/or assistance data sent by the UE 1 or another UE.

In another possible implementation, the maximum response time is notified by the network device to the UE 2, and the network device may send first indication information to the UE 2. For example, the network device indicates the first indication information while indicating QoS of a current positioning service to the UE 2; or the network device indicates the first indication information while indicating SL-PRS-related configuration information and/or assistance data to the UE 2.

Optionally, the first indication information may indicate the maximum response time by indicating a time period. For example, the first indication information indicates that the UE 2 needs to send the second message in a time period after receiving the first indication information. Duration of the time period may be 10 milliseconds, 1 second, 10 seconds, or the like.

Optionally, the first indication information may be included in an SLPP message, or included in an RRC message, or included in a PHY message (for example, SCI), or included in a MAC message (for example, a MAC control element). This is not limited in embodiments of this application.

In embodiments of this application, if the second message is the positioning message, for example, when the second message indicates positioning-related measurement result information or location information, the first indication information may indicate the maximum response time for sending the positioning message by the UE 2. If the second message is the positioning reference signal, for example, the second message is the sidelink positioning reference signal, the first indication information may indicate the maximum response time for sending the sidelink positioning reference signal by the UE 2.

In S460, the UE 1 receives the second message in the first time period, where the UE 1 is in the DRX active time in the first time period.

To meet the delay requirement of the positioning service, the UE 1 needs to be able to receive the positioning message or the positioning reference signal sent by the UE 2 in time.

In the method provided in this application, the UE 1 may be enabled to enter active time (active time), so that the UE 1 can receive, in the active time, a positioning message or a positioning reference signal that needs to be received.

To enable the UE 1 to receive, in the active time, the positioning message or the positioning reference signal that needs to be received, the UE 1 needs to enter the active time, and the UE 2 further needs to send the positioning message or the positioning reference signal to the UE 1 in the active time of the UE 1. Therefore, the UE 2 needs to learn of a latest moment at which the positioning message or the positioning reference signal is sent.

The maximum response time is the latest moment at which the second message is sent. Optionally, the latest moment may be determined by the UE 1 based on the QoS of the positioning service, or may be determined by the network device based on the QoS of the positioning service and notified to the UE 1, or may be determined by a UE other than the UE 1 and the UE 2 based on the QoS of the positioning service and notified to the UE 1. For a manner in which the UE 2 learns of the latest moment, refer to step S450.

In this embodiment of this application, the first time period includes a time period from sending the first message by the UE 1 to receiving the second message, or the first time period includes a time period from a first moment to receiving the second message, and the first moment is a moment after the UE 1 sends the first message.

In a possible implementation, the first time period includes the time period from sending the first message by the UE 1 to receiving the second message. Optionally, for example, a moment at which the UE 1 sends the first message is referred to as a second moment. If the UE 1 is in an active time period in a DRX cycle at the second moment, the UE 1 keeps in the active state before receiving the second message. If the UE 1 is in the dormant state at the second moment, the UE 1 may enter the active time (or enter the active state or enter the active time), and keep in the active state before receiving the second message.

In another possible implementation, the first time period includes the time period from the first moment to receiving the second message, and the first moment is a moment after the UE 1 sends the first message. A manner of determining the first moment is described below.

For the UE 1 to be in the active time, a MAC layer of the UE 1 should first be enabled to learn that the MAC layer currently needs to enter the active time. Therefore, the MAC layer needs to obtain second indication information, and the second indication information indicates the MAC layer to enter the active state. In embodiments of this application, that the MAC layer of the UE 1 enters the active state may also be understood as that the UE 1 enters the active state.

In a possible implementation, the second indication information includes activation time information, and the activation time information indicates maximum time (or longest time, longest duration, maximum duration, or the like) for which the UE 1 (or the MAC layer of the UE 1) keeps in the active state. The maximum time may be determined based on a QoS requirement of the positioning service.

When the second message is the positioning message, for example, both the first message and the second message are SLPP messages, the SLPP layer sends the second indication information to the MAC layer.

When the second message is the positioning reference signal, the first message may be an SLPP message, a radio resource control RRC message, a MAC message, or a physical PHY message. In this case, the SLPP layer, an RRC layer, or the PHY layer sends the second indication information to the MAC layer, or the MAC layer directly determines the second indication information.

After the MAC layer receives the second indication information, the MAC layer may enter the active state in response to the second indication information. Specifically, the MAC layer may determine the first moment in the following manners:
(1) The first moment is a moment at which the MAC layer receives the second indication information. In this case, the UE 1 enters the active state.

For example, when the first message is the SLPP message, the SLPP layer sends the second indication information to the MAC layer.

For another example, when the first message is the RRC message, the RRC layer sends the second indication information to the MAC layer.

For another example, when the first message is the PHY message, the PHY layer sends the second indication information to the MAC layer.

For another example, when the first message is the MAC message, the MAC layer directly determines the second indication information.

In addition, in some positioning scenarios, after sending the first message to the UE 2, the UE 1 further needs to send the positioning reference signal to the UE 2. In this case, in addition to the foregoing manner (1), the UE 1 may further enter the active state in the following manner.

(2) The MAC layer receives the second indication information, and the MAC layer sends third indication information to the PHY layer, where the third indication information indicates the PHY layer to send the positioning reference signal.

The first moment is a moment at which the MAC layer sends the third indication information. In this case, the UE 1 enters the active state.

For example, when the first message is the SLPP message, the SLPP layer sends the second indication information to the MAC layer, and the MAC layer sends the third indication information to the PHY layer.

For another example, when the first message is the RRC message, the RRC layer sends the second indication information to the MAC layer, and the MAC layer sends the third indication information to the PHY layer.

For another example, when the first message is the MAC message, the MAC layer directly determines the second indication information, and then the MAC layer sends the third indication information to the PHY layer.

For another example, when the first message is the PHY message, the PHY layer sends the second indication information to the MAC layer, and the MAC layer sends the third indication information to the PHY layer.

(3) The MAC layer receives the second indication information, the MAC layer sends third indication information to the PHY layer, the PHY layer receives the third indication information and sends the positioning reference signal, and then the PHY layer sends fourth indication information to the MAC layer, where the fourth indication information indicates that the PHY layer has sent the positioning reference signal.

The first moment is a moment at which the MAC layer receives the fourth indication information. In this case, the UE 1 enters the active state.

For example, when the first message is the SLPP message, the SLPP layer sends the second indication information to the MAC layer, the MAC layer sends the third indication information to the PHY layer, the PHY layer receives the third indication information and sends the positioning reference signal, and then the PHY layer sends the fourth indication information to the MAC layer.

For another example, when the first message is the RRC message, the RRC layer sends the second indication information to the MAC layer, the MAC layer sends the third indication information to the PHY layer, the PHY layer receives the third indication information and sends the positioning reference signal, and then the PHY layer sends the fourth indication information to the MAC layer.

For another example, when the first message is the MAC message, the MAC layer directly determines the second indication information, the MAC layer sends the third indication information to the PHY layer, the PHY layer receives the third indication information and sends the positioning reference signal, and then the PHY layer sends the fourth indication information to the MAC layer.

For another example, when the first message is the PHY message, the PHY layer sends the second indication information to the MAC layer, the MAC layer sends the third indication information to the PHY layer, the PHY layer receives the third indication information and sends the positioning reference signal, and then the PHY layer sends the fourth indication information to the MAC layer.

Optionally, after receiving the second message, the UE 1 may choose to end the active time (or exit the active state) at different moments.

In a possible implementation, the UE 1 exits the active state based on maximum time indicated by original activation time information.

In another possible implementation, after receiving the second message, the UE 1 may immediately exit the active state.

For example, when the second message is the positioning message, after the UE 1 receives the second message, the SLPP layer of the UE 1 sends sixth indication information to the MAC layer, where the sixth indication information indicates the MAC layer to exit the active state.

For another example, when the second message is the positioning reference signal, after the UE 1 receives the second message, the PHY layer of the UE 1 sends sixth indication information to the MAC layer, where the sixth indication information indicates the MAC layer to exit the active state.

In another possible implementation, after the UE 1 receives the second message, the UE 1 may start an inactivity timer, and exit the active state after the inactivity timer expires.

In S470, the location information is determined.

In a possible implementation, the UE 1 is the target UE, and the target UE is responsible for calculating the location information. For example, the second message is the positioning reference signal, and the UE 1 measures the positioning reference signal, and obtains the location information by calculating a measurement result. For another example, the second message indicates the measurement result information, and the UE 1 obtains the location information by calculating the measurement result information sent by the UE 2.

In another possible implementation, the UE 1 is the target UE, and the UE 2 or another UE is responsible for calculating the location information. In this case, the second message is the location information obtained by the UE 2 or the another UE through calculation, and the UE 1 obtains the location information.

In another possible implementation, the UE 1 is the server UE, and the UE 1 is responsible for calculating the location information. For example, the second message indicates the measurement result information, the UE 1 calculates the measurement result information sent by the UE 2 to obtain the location information, and the UE 1 may further send the location information obtained through calculation to the target UE.

In another possible implementation, the UE 1 is a UE other than the target UE and the anchor UE, and the UE 1 is responsible for calculating the location information. In this case, the second message is the positioning reference signal or the measurement result information, and the UE 1 obtains the location information through calculation and sends the location information to the target UE.

In some possible implementations, step S440 is a step that may be omitted, that is, the UE 1 may enter the active time without sending the first message.

For example, provided that the UE 1 needs to receive the SLPP message in the first time period, for example, in a multicast scenario, when receiving a request sent by another UE for the measurement result, the UE that needs to calculate the measurement result may enter the active time, so as to receive the measurement result.

Alternatively, provided that the UE 1 needs to receive the SL-PRS in the first time period, for example, in a multicast scenario, when receiving a positioning message sent by another UE, the UE that needs to receive the SL-PRS may enter the active time, so as to receive the SL-PRS.

Alternatively, the UE 1 may enter the active time when determining that a Multi-RTT-related measurement result needs to be provided, so that the UE 1 can receive the SL-PRS. For example, when the UE receives the SLPP message requesting the measurement result, and the message requests the UE to provide the Multi-RTT-related measurement result, the UE enters the active state.

The following uses an example in which the UE 1 is the target UE and the UE 2 is the anchor UE to specifically describe the method provided in this application by using a positioning method 500.

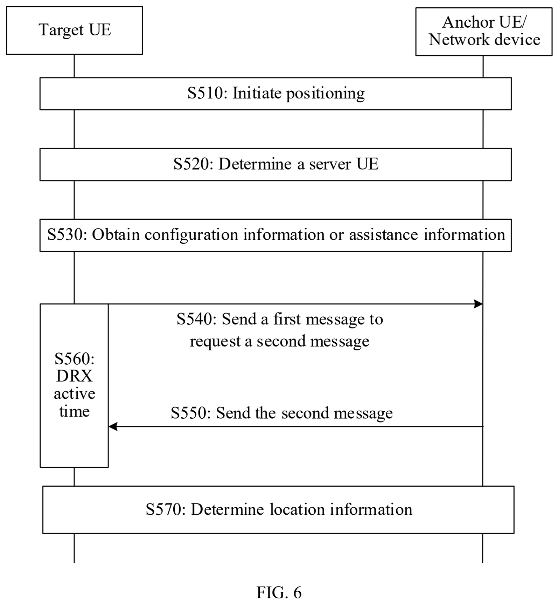

FIG. 6 shows a positioning method 500 according to this application. A communication apparatus is positioned by using the method. The method in FIG. 6 includes at least some of the following content.

S510: Initiate positioning.

S520: Determine a server UE in an SL positioning procedure.

S530: A target UE (that is, an example of a first communication apparatus) and/or an anchor UE (that is, an example of a second communication apparatus) obtain/obtains configuration information or assistance information.

S540: The target UE sends a first message to the anchor UE, where the first message is used to request a second message, and the second message is one or more of a positioning message and a positioning reference signal.

S550: The anchor UE sends the second message based on maximum response time for sending the second message.

S560: The target UE receives the second message in a first time period, where the target UE is in DRX active time in the first time period.

S570: Determine a positioning result.

According to the foregoing solution, the first time period is defined, so that the communication apparatus is in an active state in the first time period, avoiding a problem that an SL-PRS or an SLPP message cannot be received in time because the communication apparatus is in a dormant state when needing to receive the SL-PRS or the SLPP message. For example, it can be avoided that when the target UE is in a DRX-off state, the target UE receives no SLPP message and/or SL-PRS sent by the anchor UE; and it can also be avoided that a delay of a positioning service is affected because the anchor UE sends the SLPP message and/or the SL-PRS based on SL DRX of the target UE. Therefore, a delay requirement of the positioning service can be better met.

The following describes S510 to S570 in detail.

For step S510, refer to step S410.

In S520, the server UE in the SL positioning procedure is determined.

Refer to step S420. When a UE 1 is the target UE, the UE 1 may be the server UE, or a UE 2 may be the server UE, or a UE other than the UE 1 and the UE 2 is the server UE. For how to determine the server UE in this step, refer to the descriptions of how to determine the server UE when the UE 1 is the target UE in S420.

In S530, the UE obtains the configuration information and/or the assistance data.

For descriptions of the configuration information and the assistance data in step S530, refer to step S430.

Optionally, if the target UE needs to send the SL-PRS, the target UE may first obtain SL-PRS configuration information and/or assistance data, and then send the SL-PRS based on the SL-PRS configuration information and/or assistance data. If the target UE needs to receive the SL-PRS, the target UE may also first obtain SL-PRS configuration information and/or assistance data, and then receive the SL-PRS based on the SL-PRS configuration information and/or assistance data. For example, the target UE may determine the configuration information and/or the assistance data, or the target UE obtains the configuration information and/or the assistance data from the server UE, or the target UE obtains the configuration information and/or the assistance data from a network device, or the target UE may obtain the configuration information and/or the assistance data from another UE.

Optionally, if the anchor UE needs to send the SL-PRS, the anchor UE may first obtain SL-PRS configuration information and/or assistance data, and then send the SL-PRS based on the SL-PRS configuration information and/or assistance data. If the anchor UE needs to receive the SL-PRS, the anchor UE may also first obtain SL-PRS configuration information and/or assistance data, and then receive the SL-PRS based on the SL-PRS configuration information and/or assistance data. For example, the anchor UE may determine the configuration information and/or the assistance data, or the anchor UE obtains the configuration information and/or the assistance data from the server UE, or the anchor UE obtains the configuration information and/or the assistance data from a network device, or the anchor UE may obtain the configuration information and/or the assistance data from the target UE or another UE.

In S540, the target UE sends the first message to the anchor UE, where the first message is used to request the second message, and the second message is one or more of the positioning message and the positioning reference signal.

For step S540, refer to step S440.

Optionally, in this embodiment of this application, when a higher layer (for example, an SLPP layer) of the target UE sends the first message to a lower layer, it may be understood as that the target UE sends the first message; or when a PHY layer of the target UE sends the first message, it may be understood as that the target UE sends the first message. This is not limited in this application.

In a possible implementation, the second message is the positioning message. For example, the positioning message includes measurement result information, and the measurement result information may indicate a measurement result of measuring a positioning reference signal by the anchor UE, or a measurement result of measuring a sidelink positioning reference signal by the anchor UE. Alternatively, the positioning message includes location information, and the location information may indicate location information obtained by the anchor UE through calculation. Optionally, the second message may be a ProvideLocationInformation message or a message having a similar function. This is not limited in this application. Optionally, in this case, the first message is used to request the measurement result information or the location information. For example, the first message is a RequestLocationInformation message or a message having a similar function. This is not limited in this application.

For example, in the positioning method used in the current positioning procedure, the anchor UE needs to receive the SL-PRS and send the measurement result to the target UE, so that the target UE can calculate the location information of the target UE based on the measurement result. In this case, the positioning method is, for example, Multi-RTT or SL-TDOA. In this case, the target UE sends the first message to the anchor UE. The first message may be an SLPP message or a protocol/message having a same function, and the first message is used to request the measurement result.

For another example, after sending the first message to the anchor UE, the target UE further needs to send a positioning reference signal to the anchor UE, or another UE sends a positioning reference signal to the anchor UE. If the target UE requests RTOA-related information from the anchor UE, the anchor UE receives the SL-PRS and performs corresponding measurement.

For another example, if the target UE requests Multi-RTT-related measurement result information from the anchor UE, for example, Multi-RTT-related time difference information, the anchor UE receives the SL-PRS and performs corresponding measurement. In addition, the anchor UE may further send an SL-PRS used for the Multi-RTT.

In another possible implementation, when some positioning methods are used to position the target UE, the target UE needs to receive a positioning reference signal sent by the anchor UE, or request a positioning reference signal from the anchor UE, or trigger the anchor UE to send a positioning reference signal. In this case, the target UE sends the first message to the anchor UE, and the first message is used to request the positioning reference signal or trigger a peer UE to send the positioning reference signal. For example, the positioning method used in this case is Multi-RTT or SL-TDOA (for example, the UE needs to measure an RSTD).

In S550, the anchor UE sends the second message based on the maximum response time for sending the second message.

For step S550, refer to step S450.

In a possible implementation, the maximum response time is notified by the target UE to the anchor UE.

For example, when the target UE sends the first message to the anchor UE, the first message further includes first indication information, and the first indication information indicates the maximum response time for sending the second message by the anchor UE. For another example, before the target UE sends the first message to the anchor UE, the target UE sends first indication information to the anchor UE. For example, the target UE indicates the first indication information while indicating QoS of a current positioning service to the anchor UE. For another example, before the target UE sends the first message to the anchor UE, the anchor UE obtains first indication information while obtaining the configuration information and/or the assistance data. Optionally, the anchor UE may receive configuration information and/or assistance data sent by the target UE or another UE.

In another possible implementation, a latest moment is notified by the network device to the anchor UE, and the network device may send first indication information to the anchor UE. For example, the network device indicates the first indication information while indicating QoS of a current positioning service to the anchor UE; or the network device indicates the first indication information while indicating SL-PRS-related configuration information and/or assistance data to the anchor UE.

In S560, the target UE receives the second message in the first time period, where the target UE is in the DRX active time in the first time period.

For step S560, refer to step S460.

Optionally, the second message sent by the anchor UE to the target UE is a positioning message or a positioning reference signal corresponding to the first message sent by the target UE. For example, if the target UE requests RTOA-related measurement result information from the anchor UE, the anchor UE sends the RTOA-related measurement result information. For another example, if the target UE requests Multi-RTT-related measurement result information from the anchor UE, the anchor UE sends Multi-RTT time difference-related measurement result information. For another example, the target UE determines that the positioning method is SL-TDOA. If the target UE needs to receive the SL-PRS sent by the anchor UE to measure and obtain reference signal time difference (reference signal time difference, RSTD)-related information, the target UE may enable the anchor UE to send the SL-PRS by using the first message.

In a possible implementation, the first time period includes a time period from sending the first message to receiving the second message.

In another possible implementation, the first time period includes a time period from a first moment to receiving the second message, and the first moment is a moment after the target UE sends the first message. For a manner of determining the first moment, refer to step S450.

For the target UE to be in the active time, a MAC layer of the target UE should first be enabled to learn that the MAC layer currently needs to enter the active time. Therefore, the MAC layer needs to obtain second indication information, and the second indication information indicates the MAC layer to enter the active state.

In a possible implementation, the second indication information includes activation time information, and the activation time information indicates maximum time for which the target UE keeps in the active state. The maximum time may be determined based on a QoS requirement of the positioning service.

After the MAC layer receives the second indication information, the MAC layer may enter the active state in response to the second indication information. Specifically, the MAC layer may determine the first moment in several manners. For a manner of determining the first moment, refer to the manner (1) to the manner (4) in step S450.

In S570, the location information is determined.

Refer to step S470.

The following uses an example in which the UE 2 is the target UE and the UE 1 is the anchor UE to specifically describe the method provided in this application by using a positioning method 600.

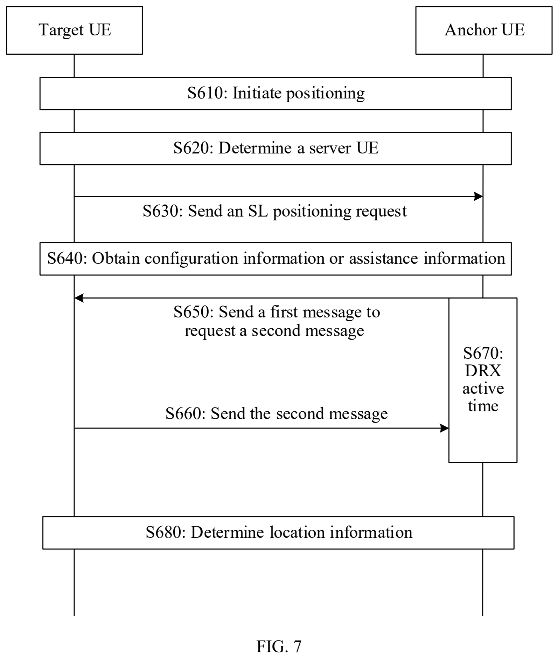

FIG. 7 shows a positioning method 600 according to this application. The method in FIG. 7 includes at least some of the following content.

S610: Initiate positioning.

S620: Determine a server UE in an SL positioning procedure.

S630: An anchor UE (that is, an example of a first communication apparatus) receives an SL positioning requirement for a target UE (that is, an example of a second communication apparatus), to start positioning the target UE.

S640: The anchor UE and/or the target UE obtain/obtains configuration information and/or assistance information.

S650: The anchor UE sends a first message to the target UE, where the first message is used to request a second message, and the second message is one or more of a positioning message and a positioning reference signal.

S660: The target UE sends the second message based on maximum response time for sending the second message.

S670: The anchor UE receives the second message in a first time period, where the anchor UE is in DRX active time in the first time period.

S680: Determine location information.

According to the foregoing solution, the first time period is defined, so that the communication apparatus is in an active state in the first time period, avoiding a problem that an SL-PRS or an SLPP message cannot be received in time because the communication apparatus is in a dormant state when needing to receive the SL-PRS or the SLPP message. Therefore, a delay requirement of a positioning service can be better met.

The following describes S610 to S680 in detail.

For step S610, refer to step S410.

In S620, the server UE in the SL positioning procedure is determined.

Refer to step S420. When a UE 1 is the target UE, the UE 1 may be the server UE, or a UE 2 may be the server UE, or a UE other than the UE 1 and the UE 2 is the server UE. For how to determine the server UE in this step, refer to the descriptions of how to determine the server UE when the UE 1 is the target UE in S420.

In S630, the anchor UE receives the SL positioning requirement for the target UE, to start positioning the target UE. For example, the anchor UE receives a positioning requirement sent by the target UE, a positioning requirement sent by the server UE, or a positioning requirement sent by a network device.

In S640, the anchor UE and/or the target UE obtain/obtains the configuration information and/or the assistance information.

For descriptions of the configuration information or the assistance information, refer to step S430 and step S530.

In S650, the anchor UE sends the first message to the target UE, where the first message is used to request the second message, and the second message is one or more of the positioning message and the positioning reference signal. For step S650, refer to step S440.

Optionally, in this embodiment of this application, when a higher layer (for example, an SLPP layer) of the anchor UE sends the first message to a lower layer, it may be understood as that the anchor UE sends the first message; or when a PHY layer of the anchor UE sends the first message, it may be understood as that the anchor UE sends the first message. This is not limited in this application.

In a possible implementation, the second message is the positioning message. For example, the positioning message includes measurement result information, and the measurement result information may indicate a measurement result of measuring a positioning reference signal by the target UE, or a measurement result of measuring a sidelink positioning reference signal by the target UE. Alternatively, the positioning message includes the location information, and the location information may indicate location information obtained by the anchor UE through calculation. Optionally, the second message may be a ProvideLocationInformation message or a message having a similar function. This is not limited in this application. Optionally, in this case, the first message is used to request the measurement result information or the location information. For example, the first message is a RequestLocationInformation message or a message having a similar function. This is not limited in this application.

For example, in the positioning method used in the current positioning procedure, the target UE needs to receive the SL-PRS and send the measurement result to the anchor UE, so that the anchor UE can calculate the location information of the target UE based on the measurement result. In this case, the positioning method is, for example, Multi-RTT or SL-TDOA. In this case, the anchor UE sends the first message to the target UE. The first message may be an SLPP message or a protocol/message having a same function, and the first message is used to request the measurement result.

For another example, after sending the first message to the target UE, the anchor UE further needs to send a positioning reference signal to the target UE, or another UE sends a positioning reference signal to the target UE. If the anchor UE requests RTOA-related information from the target UE, the target UE receives the SL-PRS and performs corresponding measurement.

For another example, if the anchor UE requests Multi-RTT-related measurement result information from the target UE, for example, Multi-RTT-related time difference information, the target UE receives the SL-PRS and performs corresponding measurement. In addition, the target UE may further send an SL-PRS used for the Multi-RTT.

It may be understood that the anchor UE needs to obtain the measurement result of the target UE because the anchor UE is responsible for calculating a positioning result. Optionally, in this case, the anchor UE may also be understood as the server UE. In addition, that the anchor UE sends the first message to the target UE to request the measurement result information is a possible implementation. In addition, the anchor UE may further send the first message to another anchor UE to request the measurement result information. The another anchor UE is a UE that assists in implementing positioning of the target UE.

In another possible implementation, when some positioning methods are used to position the target UE, the anchor UE needs to receive a positioning reference signal sent by the target UE, or request a positioning reference signal from the target UE, or trigger the target UE to send a positioning reference signal. In this case, the anchor UE sends the first message to the target UE, and the first message is used to request the positioning reference signal or trigger the target UE to send the positioning reference signal. For example, the positioning method used in this case is Multi-RTT or SL-TDOA (for example, the UE needs to measure an RTOA).

In S660, the target UE sends the second message based on the maximum response time for sending the second message.

For step S660, refer to steps S450 and S550.

In a possible implementation, the maximum response time is notified by the anchor UE to the target UE.

For example, when the anchor UE sends the first message to the target UE, the first message further includes first indication information, and the first indication information indicates the maximum response time for sending the second message by the target UE. For another example, before the anchor UE sends the first message to the target UE, the anchor UE sends first indication information to the target UE. For example, the anchor UE indicates the first indication information while indicating QoS of a current positioning service to the target UE. For another example, before the anchor UE sends the first message to the target UE, the target UE obtains first indication information while obtaining the configuration information and/or the assistance data. Optionally, the target UE may receive configuration information and/or assistance data sent by the anchor UE or another UE.

In another possible implementation, a latest moment is notified by the network device to the target UE, and the network device may send first indication information to the target UE. For example, the network device indicates the first indication information while indicating QoS of a current positioning service to the target UE; or the network device indicates the first indication information while indicating SL-PRS-related configuration information and/or assistance data to the target UE.

In S670, the anchor UE receives the second message in the first time period, where the anchor UE is in the DRX active time in the first time period.

For step S670, refer to step S460.

Optionally, the second message sent by the target UE to the anchor UE is a positioning message or a positioning reference signal corresponding to the first message sent by the anchor UE. For example, if the anchor UE requests RSTD-related measurement result information from the target UE, the target UE sends the RSTD-related measurement result information. For another example, if the anchor UE requests Multi-RTT-related measurement result information from the target UE, the target UE sends Multi-RTT time difference-related measurement result information. For another example, the anchor UE determines that the positioning method is SL-TDOA. If the anchor UE needs to receive the SL-PRS sent by the target UE to measure and obtain RSTD-related information, the anchor UE may enable the target UE to send the SL-PRS by using the first message. Optionally, the anchor UE may further enable another anchor UE to send the SL-PRS by using the first message.

In a possible implementation, the first time period includes a time period from sending the first message by the anchor UE to receiving the second message.

In another possible implementation, the first time period includes a time period from a first moment to receiving the second message, and the first moment is a moment after the anchor UE sends the first message. For a manner of determining the first moment, refer to step S450.

For the anchor UE to be in the active time, a MAC layer of the anchor UE should first be enabled to learn that the MAC layer currently needs to enter the active time. Therefore, the MAC layer needs to obtain second indication information, and the second indication information indicates the MAC layer to enter the active state.

In a possible implementation, the second indication information includes activation time information, and the activation time information indicates maximum time for which the target UE keeps in the active state. The maximum time may be determined based on a QoS requirement of the positioning service.

After the MAC layer receives the second indication information, the MAC layer may enter the active state in response to the second indication information. Specifically, the MAC layer may determine the first moment in several manners. For a manner of determining the first moment, refer to the manner (1) to the manner (4) in step S450.

In S680, the location information is determined.

Refer to step S470.

The following uses an example in which the UE 1 is the server UE to specifically describe the method provided in this application by using a positioning method 700.

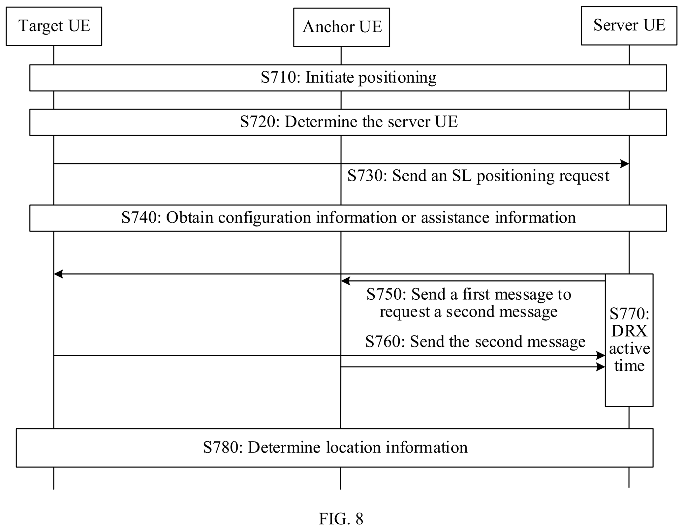

FIG. 8 shows a positioning method 700 according to this application. The method in FIG. 8 includes at least some of the following content.

S710: Initiate positioning.

S720: Determine a server UE in an SL positioning procedure.

S730: The server UE (that is, an example of a first communication apparatus) receives an SL positioning requirement for a target UE, to start positioning the target UE.

S740: One or more of the server UE, the target UE, and an anchor UE obtain configuration information or assistance information.

S750: The server UE sends a first message to the target UE and the anchor UE, where the first message is used to request a second message, and the second message is one or more of a positioning message and a positioning reference signal.

S760: The target UE and the anchor UE send the second message based on maximum response time for sending the second message.

S770: The server UE receives the second message in a first time period, where the server UE is in DRX active time in the first time period.

S780: Determine location information.

The following describes S710 to S780 in detail.

For step S710, refer to step S410.

In S720, the server UE in the SL positioning procedure is determined.

Refer to step S420. When a UE 1 is the target UE, the UE 1 may be the server UE, or a UE 2 may be the server UE, or a UE other than the UE 1 and the UE 2 is the server UE. For how to determine the server UE in this step, refer to the descriptions of how to determine the server UE when the UE 1 is the target UE in S420.

In S730, the server UE receives the SL positioning requirement for the target UE, to start positioning the target UE. For example, the server UE receives a positioning requirement sent by the target UE, or a positioning requirement sent by a network device, or a positioning requirement sent by any UE.

In S740, one or more of the server UE, the target UE, and the anchor UE obtain the configuration information or the assistance information.

For descriptions of the configuration information or the assistance information, refer to step S430 and step S530.

In S750, the server UE sends the first message to the target UE and the anchor UE, where the first message is used to request the second message, and the second message is one or more of the positioning message and the positioning reference signal. For step S750, refer to step S440.

Optionally, in this embodiment of this application, when a higher layer (for example, an SLPP layer) of the server UE sends the first message to a lower layer, it may be understood as that the server UE sends the first message; or when a PHY layer of the server UE sends the first message, it may be understood as that the server UE sends the first message. This is not limited in this application.

In a possible implementation, the second message is the positioning message. For example, the positioning message includes measurement result information, and the measurement result information may indicate a measurement result of measuring a positioning reference signal by the target UE and/or the anchor UE, or a measurement result of measuring a sidelink positioning reference signal by the target UE and/or the anchor UE. Optionally, the second message may be a ProvideLocationInformation message or a message having a similar function. This is not limited in this application. Optionally, in this case, the first message is used to request the measurement result information or the location information. For example, the first message is a RequestLocationInformation message or a message having a similar function. This is not limited in this application.

For example, in the positioning method used in the current positioning procedure, the target UE and the anchor UE need to receive the SL-PRS and send the measurement result to the server UE, so that the server UE can calculate the location information of the target UE based on the measurement result. In this case, the positioning method is, for example, Multi-RTT, SL-AOA, or SL-TDOA. In this case, the server UE sends the first message to the anchor UE and the target UE. The first message may be an SLPP message or a protocol/message having a same function, and the first message is used to request the measurement result. Optionally, if a positioning scenario includes one or more anchor UEs, the server UE may send the first message to the one or more anchor UEs, and then the one or more anchor UEs send the second message to the server UE.

For another example, after sending the first message to the target UE, the server UE further needs to send a positioning reference signal to the target UE, or another UE sends a positioning reference signal to the target UE. If the server UE requests RTOA-related information from the target UE, the target UE receives the SL-PRS and performs corresponding measurement.

For another example, if the server UE requests Multi-RTT-related measurement result information from the target UE, for example, Multi-RTT-related time difference information, the target UE receives the SL-PRS and performs corresponding measurement. In addition, the target UE may further send an SL-PRS used for the Multi-RTT.

It may be understood that the server UE needs to obtain the measurement result of the target UE and/or the anchor UE because the server UE is responsible for calculating a positioning result.

In another possible implementation, when some positioning methods are used to position the target UE, the server UE needs to receive a positioning reference signal sent by the target UE and/or the anchor UE, or request a positioning reference signal from the target UE and/or the anchor UE, or trigger the target UE and/or the anchor UE to send a positioning reference signal. In this case, the server UE sends the first message to the target UE and/or the anchor UE, and the first message is used to request the positioning reference signal or trigger the target UE and/or the anchor UE to send the positioning reference signal.

In S760, the target UE and the anchor UE send the second message based on the maximum response time for sending the second message. For step S760, refer to steps S450 and S550.

In a possible implementation, the maximum response time is notified by the server UE to the target UE and the anchor UE.

For example, when the server UE sends the first message to the target UE and the anchor UE, the first message further includes first indication information, and the first indication information indicates the maximum response time for sending the second message by the target UE and the anchor UE. For another example, before the server UE sends the first message to the target UE and the anchor UE, the server UE sends first indication information to the target UE and the anchor UE. For example, the server UE indicates the first indication information while indicating QoS of a current positioning service to the target UE and the anchor UE. For another example, before the server UE sends the first message to the target UE and the anchor UE, the target UE and the anchor UE obtain first indication information while obtaining the configuration information and/or the assistance data.

In another possible implementation, a latest moment is notified by the network device to the target UE and the anchor UE, and the network device may send first indication information to the target UE and the anchor UE. For example, the network device indicates the first indication information while indicating QoS of a current positioning service to the target UE and the anchor UE; or the network device indicates the first indication information while indicating SL-PRS-related configuration information and/or assistance data to the target UE and the anchor UE.

In S770, the server UE receives the second message in the first time period, where the server UE is in the DRX active time in the first time period. For step S770, refer to step S460.

Optionally, the second message sent by the target UE and the anchor UE to the server UE is a positioning message or a positioning reference signal corresponding to the first message sent by the server UE. For example, if the server UE requests RSTD-related measurement result information from the target UE and the anchor UE, the target UE and the anchor UE send the RSTD-related measurement result information. For another example, if the server UE requests Multi-RTT-related measurement result information from the target UE and the anchor UE, the target UE and the anchor UE send Multi-RTT time difference-related measurement result information.

In a possible implementation, the first time period includes a time period from sending the first message by the server UE to receiving the second message.

In another possible implementation, the first time period includes a time period from a first moment to receiving the second message, and the first moment is a moment after the server UE sends the first message. For a manner of determining the first moment, refer to step S450.

For the server UE to be in the active time, a MAC layer of the server UE should first be enabled to learn that the MAC layer currently needs to enter the active time. Therefore, the MAC layer needs to obtain second indication information, and the second indication information indicates the MAC layer to enter an active state.

In a possible implementation, the second indication information includes activation time information, and the activation time information indicates maximum time for which the server UE keeps in the active state. The maximum time may be determined based on a QoS requirement of the positioning service.

After the MAC layer receives the second indication information, the MAC layer may enter the active state in response to the second indication information. Specifically, the MAC layer may determine the first moment in several manners. For a manner of determining the first moment, refer to the manner (1) to the manner (4) in step S450.

In S780, the location information is determined.

Refer to step S470.

As mentioned above, the UE may enter the active time when determining that a Multi-RTT-related measurement result needs to be provided, so that the UE can receive the SL-PRS. For example, when the target UE and the anchor UE in the method 700 receive the SLPP message requesting the measurement result, and the message requests the UE to provide the Multi-RTT-related measurement result, the target UE and the anchor UE may also enter the active state.

The following describes a positioning method 800. In the method, when a communication apparatus needs to receive an SL-PRS or an SLPP message, to avoid that the communication apparatus is in a dormant state, a DRX configuration of the communication apparatus may be canceled or reconfigured.

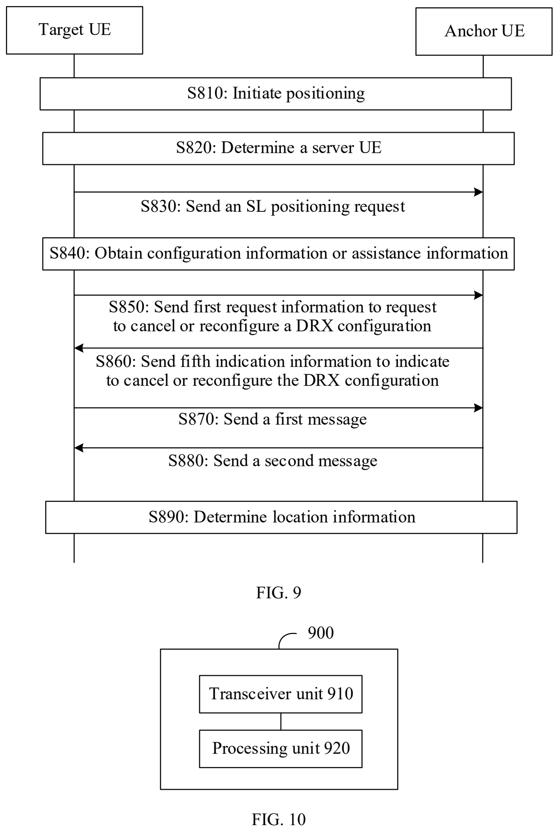

FIG. 9 shows a positioning method 800 according to this application. The method in FIG. 9 includes at least some of the following content.

S810: Initiate positioning.

S820: Determine a server UE in an SL positioning procedure.

S830: A target UE (that is, an example of a first communication apparatus) sends an SL positioning request to an anchor UE (that is, an example of a second communication apparatus), to start positioning the target UE.

S840: The anchor UE and/or the target UE obtain/obtains configuration information or assistance information.

S850: The target UE sends first request information to the anchor UE, where the first request information is used to request the anchor UE to cancel or reconfigure a DRX configuration for the target UE, and the first request information may carry an SL DRX configuration preferred or recommended by the target UE, so that the anchor UE can reconfigure SL DRX for the target UE based on the first request information.

S860: The anchor UE sends fifth indication information to the target UE, where the fifth indication information indicates the target UE to cancel the DRX configuration or reconfigure the DRX configuration for the target UE. Optionally, when reconfiguring the DRX configuration for the target UE, the anchor UE may refer to the preferred or recommended SL DRX configuration sent by the target UE.

S870: The target UE sends a first message to the anchor UE, where the first message is used to request a second message, and the second message is one or more of a positioning message and a positioning reference signal.

S880: The target UE receives the second message.

S890: Determine location information.

It may be understood that, in another example of the method 800, the anchor UE (that is, an example of the first communication apparatus) may alternatively be supported in sending the first request information to the target UE (that is, an example of the second communication apparatus).

According to the foregoing solution, the target UE may keep in a monitoring state to receive an SLPP message and/or an SL-PRS. In this way, it can be avoided that when the target UE is in a DRX-off state, the target UE receives no SLPP message and/or SL-PRS sent by the anchor UE; and it can also be avoided that a delay of a positioning service is affected because the anchor UE sends the SLPP message and/or the SL-PRS based on the SL DRX of the target UE.

FIG. 10 is a block diagram of a communication apparatus 900 according to an embodiment of this application. The apparatus 900 includes a transceiver unit 910 and a processing unit 920. The transceiver unit 910 may communicate with the outside, and the processing unit 920 is configured to process data. The transceiver unit 910 may also be referred to as a communication interface or a communication unit.

In a possible implementation, the apparatus 900 may further include a storage unit. The storage unit may be configured to store instructions and/or data. The processing unit 920 may read the instructions and/or the data in the storage unit.

The apparatus 900 may be configured to perform an action performed by the base station in the foregoing method embodiments. In this case, the apparatus 900 may be a base station or a component that can be configured in the base station. The transceiver unit 910 is configured to perform receiving/sending related operations on a base station side in the foregoing method embodiments. The processing unit 920 is configured to perform processing-related operations on the base station side in the foregoing method embodiments.

Alternatively, the apparatus 900 may be configured to perform an action performed by the terminal device in the foregoing method embodiments. In this case, the apparatus 900 may be a terminal device or a component that can be configured in the terminal device. The transceiver unit 910 is configured to perform receiving/sending-related operations on a terminal device side in the foregoing method embodiments. The processing unit 920 is configured to perform processing-related operations on the terminal device side in the foregoing method embodiments.

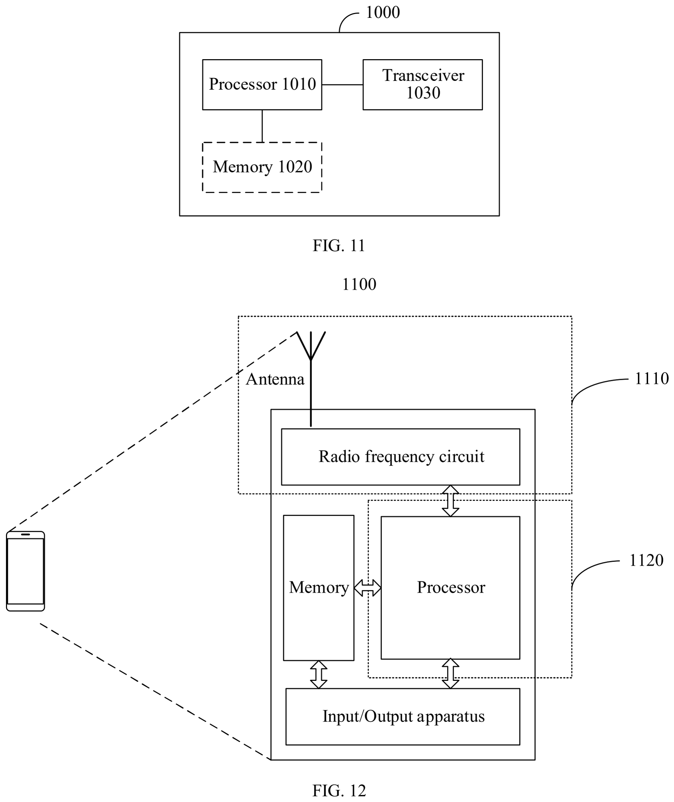

As shown in FIG. 11, an embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the method in the foregoing method embodiments is performed.

In a possible implementation, the communication apparatus 1000 includes one or more processors 1010.

In a possible implementation, as shown in FIG. 11, the communication apparatus 1000 may further include a memory 1020.

In a possible implementation, the communication apparatus 1000 may include one or more memories 1020.

In a possible implementation, the memory 1020 and the processor 1010 may be integrated together, or disposed separately.

In a possible implementation, as shown in FIG. 11, the wireless communication apparatus 1000 may further include a transceiver 1030. The transceiver 1030 is configured to receive and/or send a signal. For example, the processor 1010 is configured to control the transceiver 1030 to receive and/or send the signal.

In a solution, the communication apparatus 1000 is configured to implement operations performed by the base station in the foregoing method embodiments.

For example, the processor 1010 is configured to implement processing-related operations performed by the base station in the foregoing method embodiments. The transceiver 1030 is configured to implement receiving/sending-related operations performed by the base station in the foregoing method embodiments.

In another solution, the communication apparatus 1000 is configured to implement operations performed by the terminal device in the foregoing method embodiments.

For example, the processor 1010 is configured to implement processing-related operations performed by the terminal device in the foregoing method embodiments. The transceiver 1030 is configured to implement receiving/sending-related operations performed by the terminal device in the foregoing method embodiments.

An embodiment of this application further provides a communication apparatus 1100. The communication apparatus 1100 may be a terminal device or a chip. The communication apparatus 1100 may be configured to perform operations performed by the terminal device in the foregoing method embodiments. When the communication apparatus 1100 is the terminal device, FIG. 12 is a diagram of a simplified structure of the terminal device. For ease of understanding and illustration, an example in which the terminal device is a mobile phone is used in FIG. 12. As shown in FIG. 12, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When needing to send data, after performing baseband processing on to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 12, the terminal device includes a transceiver unit 1110 and a processing unit 1120. The transceiver unit 1110 may also be referred to as a transceiver, a transceiver machine, a transceiver apparatus, or the like. The processing unit 1120 may also be referred to as a processor, a processing board, a processing module, a processing apparatus, or the like.

In a possible implementation, a device that is in the transceiver unit 1110 and that is configured to implement a receiving function may be considered as a receiving unit, and a device that is in the transceiver unit 1110 and that is configured to implement a sending function may be considered as a sending unit. In other words, the transceiver unit 1110 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

For example, in an implementation, the transceiver unit 1110 is configured to perform a receiving operation of the terminal device. The processing unit 1120 is configured to perform a processing action on a terminal device side.

It should be understood that FIG. 12 is merely an example instead of a limitation. The terminal device including the transceiver unit and the processing unit may not depend on the structure shown in FIG. 12.

When the communication apparatus 1100 is the chip, the chip includes a transceiver unit and a processing unit. The transceiver unit may be an input/output circuit or a communication interface. The processing unit may be a processor, a microprocessor, or an integrated circuit integrated on the chip. The input circuit may be an input pin, the output circuit may be an output pin, and a processing circuit may be a transistor, a gate circuit, a trigger, various logic circuits, and the like. An input signal received by the input circuit may be received and input by, for example without limitation to, a receiver, and a signal output by the output circuit may be output to and transmitted by, for example without limitation to, a transmitter; and the input circuit and the output circuit may be different circuits or may be a same circuit. In this case, the circuit is used as the input circuit and the output circuit respectively at different moments.

An embodiment of this application further provides a communication apparatus 1200. The communication apparatus 1200 may be a base station or a chip. The communication apparatus 1200 may be configured to perform operations performed by the base station in the foregoing method embodiments.

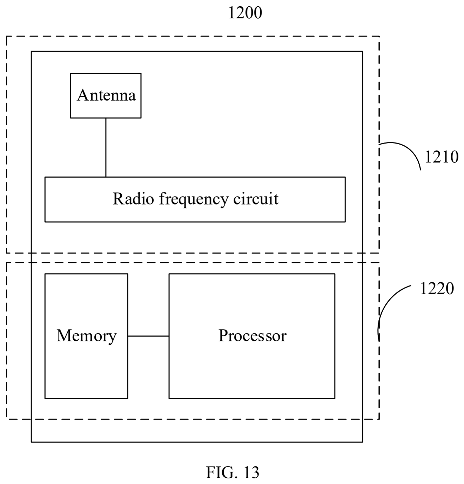

When the communication apparatus 1200 is the base station, FIG. 13 is a diagram of a simplified structure of the base station. The base station includes a part 1210 and a part 1220. The part 1210 is mainly configured to: receive and send a radio frequency signal, and perform conversion between a radio frequency signal and a baseband signal. The part 1220 is mainly configured to: perform baseband processing, control the base station, and the like. The part 1210 may be usually referred to as a transceiver unit, a transceiver machine, a transceiver circuit, a transceiver, or the like. The part 1220 is usually a control center of the base station, and may usually be referred to as a processing unit, and is configured to control the base station to perform a processing operation on a network device side in the foregoing method embodiments.

The transceiver unit in the part 1210 may also be referred to as a transceiver machine, a transceiver, or the like. The transceiver unit includes an antenna and a radio frequency circuit, where the radio frequency circuit is mainly configured to perform radio frequency processing. In a possible implementation, in the part 1210, a device configured to implement a receiving function may be considered as a receiving unit, and a device configured to implement a sending function may be considered as a sending unit. In other words, the part 1210 includes the receiving unit and the sending unit. The receiving unit may also be referred to as a receiver machine, a receiver, a receive circuit, or the like. The sending unit may be referred to as a transmitter machine, a transmitter, a transmit circuit, or the like.

The part 1220 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver unit in the part 1210 is configured to perform receiving/sending-related steps performed by the base station in embodiments. The part 1220 is configured to perform processing-related steps performed by the base station.

It should be understood that FIG. 13 is merely an example instead of a limitation. The network device including the transceiver unit and the processing unit may not depend on the structure shown in FIG. 13.

When the communication apparatus 1200 is the chip, the chip includes a transceiver unit and a processing unit. The transceiver unit may be an input/output circuit or a communication interface. The processing unit is a processor, a microprocessor, or an integrated circuit integrated on the chip. The input circuit may be an input pin, the output circuit may be an output pin, and a processing circuit may be a transistor, a gate circuit, a trigger, various logic circuits, and the like. An input signal received by the input circuit may be received and input by, for example without limitation to, a receiver, and a signal output by the output circuit may be output to and transmitted by, for example without limitation to, a transmitter; and the input circuit and the output circuit may be different circuits or may be a same circuit. In this case, the circuit is used as the input circuit and the output circuit respectively at different moments.

An embodiment of this application further provides a computer-readable storage medium. The computer-readable storage medium stores computer instructions used to implement the method performed by the terminal device or the method performed by the base station in the foregoing method embodiments.

For example, when a computer program is executed by a computer, the computer is enabled to implement the method performed by the terminal device or the method performed by the base station in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the base station and the terminal device in the foregoing embodiments.

For explanations and beneficial effects of related content in any wireless communication apparatus provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a terminal device or a base station, or may be a functional module that is in the terminal device or the base station and that can invoke and execute the program.

Aspects or features in embodiments of this application may be implemented as a method, an apparatus, or a product that uses standard programming and/or engineering technologies. The term "product" used in this specification may cover a computer program that can be accessed from any computer-readable device, carrier, or medium. For example, a computer-readable medium may include but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive).

The various storage media described herein may represent one or more devices and/or other machine-readable media for storing information. The term "machine-readable medium" may include but is not limited to: radio channels and various other media capable of storing, containing, and/or carrying instructions and/or data.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A positioning method, comprising:
sending, by a first communication apparatus, a first message, wherein the first message is used to request a second message from a second communication apparatus, and the second message is one or more of a positioning message and a positioning reference signal; and
receiving, by the first communication apparatus, the second message in a first time period, wherein the first time period comprises a time period from sending the first message to receiving the second message, or the first time period comprises a time period from a first moment to receiving the second message, and the first moment is a moment after the first communication apparatus sends the first message, wherein
the first communication apparatus is in discontinuous reception DRX active time in the first time period.

2. The method according to claim 1, wherein the first message comprises first indication information, and the first indication information indicates maximum response time for sending the second message by the second communication apparatus.

3. The method according to claim 1, wherein before sending, by the first communication apparatus, the first message, the method further comprises:
sending, by the first communication apparatus, first indication information, wherein the first indication information indicates maximum response time for sending the second message by the second communication apparatus.

4. The method according to claim 2 or 3, wherein the method further comprises:
receiving, by the first communication apparatus, the first indication information from a third communication apparatus or a network device; or
determining, by the first communication apparatus, the first indication information.

5. The method according to any one of claims 1 to 4, wherein the method further comprises:
receiving, by a media access control MAC layer of the first communication apparatus, second indication information; and
entering, by the first communication apparatus, an active state in response to the second indication information, wherein the second indication information comprises activation time information, and the activation time information indicates maximum time for which the first communication apparatus keeps in the active state.

6. The method according to any one of claims 1 to 5, wherein the second message is the positioning message, the first message is a sidelink positioning protocol SLPP message, and the method further comprises:
sending, by an SLPP layer of the first communication apparatus, the second indication information to the MAC layer, wherein the second indication information comprises the activation time information, and the activation time information indicates the maximum time for which the first communication apparatus keeps in the active state.

7. The method according to any one of claims 1 to 5, wherein the second message is the positioning reference signal, the first message is an SLPP message, a radio resource control RRC message, or a physical PHY message, and the method further comprises:
sending, by an SLPP layer, an RRC layer, or a PHY layer of the first communication apparatus, the second indication information to the MAC layer, wherein the second indication information comprises the activation time information, and the activation time information indicates the maximum time for which the first communication apparatus keeps in the active state.

8. The method according to any one of claims 5 to 7, wherein the method further comprises:
when the MAC layer receives the second indication information, entering, by the first communication apparatus, the active state;
receiving, by the MAC layer, the second indication information, sending, by the MAC layer, third indication information to the PHY layer, wherein the third indication information indicates the PHY layer to send a positioning reference signal, and after the MAC layer sends the third indication information, entering, by the first communication apparatus, the active state; or
receiving, by the MAC layer, the second indication information, sending, by the MAC layer, third indication information to the PHY layer, receiving, by the PHY layer, the third indication information and sending a positioning reference signal, sending, by the PHY layer, fourth indication information to the MAC layer, wherein the fourth indication information indicates that the PHY layer has sent the positioning reference signal, and after the MAC layer receives the fourth indication information, entering, by the first communication apparatus, the active state.

9. The method according to any one of claims 1 to 8, wherein the positioning message comprises one or more of measurement result information, location information, assistance data, and capability information, and the positioning reference signal comprises a sidelink positioning reference signal.

10. The method according to any one of claims 1 to 5, wherein when the second message is the positioning reference signal, the method further comprises:
receiving, by the first communication apparatus, a third message, wherein the third message is used to request positioning measurement result information or location information related to multi-cell round trip time Multi-RTT; and
entering, by the first communication apparatus, the active state in response to the third message.

11. A positioning method, comprising:
sending, by a first communication apparatus, first request information to a second communication apparatus based on a positioning service, wherein the first request information is used to request the second communication apparatus to cancel or reconfigure a discontinuous reception DRX configuration for the first communication apparatus;
receiving, by the first communication apparatus, fifth indication information, wherein the fifth indication information indicates the first communication apparatus to cancel or reconfigure the DRX configuration; and
executing, by the first communication apparatus, the positioning service with the second communication apparatus.

12. A positioning method, comprising:
determining or receiving, by a second communication apparatus, first indication information, wherein the first indication information indicates maximum response time for sending a second message by the second communication apparatus, and the second message is one or more of a positioning message and a positioning reference signal;
receiving, by the second communication apparatus, a first message, wherein the first message is used to request the second message; and
sending, by the second communication apparatus, the second message based on the maximum response time.

13. A communication apparatus, comprising:
a unit configured to implement the method according to any one of claims 1 to 10, a unit configured to implement the method according to claim 11, or a unit configured to implement the method according to claim 12.

14. A computer program product, wherein the computer program product comprises computer program code, and when the computer program code is run, an apparatus is enabled to
perform the method according to any one of claims 1 to 10;
perform the method according to claim 11; or
perform the method according to claim 12.

15. A computer-readable storage medium, wherein the computer-readable storage medium stores a computer program, and when the computer program is run,
an apparatus is enabled to perform the method according to any one of claims 1 to 10;
an apparatus is enabled to perform the method according to claim 11; or
an apparatus is enabled to perform the method according to claim 12.

16. A chip system, comprising a processor, configured to invoke a computer program from a memory and run the computer program,
to enable a communication apparatus in which the chip system is installed to perform the method according to any one of claims 1 to 10;
to enable a communication apparatus in which the chip system is installed to perform the method according to claim 11; or
to enable a communication apparatus in which the chip system is installed to perform the method according to claim 12.

17. A communication system, comprising a first communication apparatus and a second communication apparatus, wherein the first communication apparatus is configured to perform the method according to any one of claims 1 to 10, and the second communication apparatus is configured to perform the method according to claim 12.
